# EUROPEAN PATENT APPLICATION

(11) **EP 4 099 135 A1**
(43) Date of publication of application: **07.12.2022**
(21) Application number: 21775558.6
(22) Date of filing: 27.01.2021
(51) Int. Cl.: G06F 3/01, G06F 3/0481, G06F 3/0484

(54) **INFORMATION PROCESSING DEVICE, INFORMATION PROCESSING METHOD, COMPUTER PROGRAM, AND AUGMENTED REALITY SENSING SYSTEM**

(30) Priority: 24.03.2020 JP 2020053386
(71) Applicant: Sony Group Corporation, Tokyo 108-0075 (JP)
(72) Inventor: YAMANO, Ikuo, Tokyo 108-0075 (JP); INATANI, Soichiro, Tokyo 108-0075 (JP); ISHIKAWA, Tsuyoshi, Tokyo 108-0075 (JP)
(74) Representative: D Young & Co LLP
(86) International application number: PCT/JP2021/002883
(87) International publication number: WO 2021/192589

(57) **Abstract**

Provided is an information processing apparatus that processes information regarding augmented reality.

The information processing apparatus includes: an acquisition unit that acquires a position of a hand and a finger gesture of a user; and a control unit that controls a displaying operation of a display device that superimposes and displays a virtual object on a real space, in which the control unit sets a virtual gripping point to a position having a certain offset with respect to the hand, and controls the display device to display a virtual object gripping operation on the basis of a positional relationship between the virtual gripping point and the virtual object and a contact state between fingertips.

## Description

### TECHNICAL FIELD

The technology disclosed in the present specification (hereinafter referred to as "the present disclosure") relates to an information processing apparatus, an information processing method, a computer program, and an augmented reality system capable of processing information regarding augmented reality.

### BACKGROUND ART

As technologies for realizing realistic experiences, virtual reality (VR), augmented reality (AR), and mixed reality (MR) have become widespread. The VR is a technology in which a virtual space is perceived as a real space. Furthermore, the AR is a technology for expanding the real space viewed from the user by adding information to a real environment surrounding a user, emphasizing or attenuating information in the real environment, or deleting information from the real environment. In addition, the MR is a technology for mixing a real space and a virtual space, for example, by displaying a virtual substance (hereinafter referred to as a "virtual object") that is replaced with a real-space object. The AR and MR are realized, for example, by using a see-through type head mounted display (hereinafter, also referred to as "AR glasses"). According to the AR technology, it is possible to superimpose and display a virtual object on the scenery in the real space observed by the user through the AR glasses, emphasize or attenuate a specific real object, or delete a specific real object to make it appear as if it does not exist.

In an operating system (OS) such as Windows or Linux (registered trademark), an operation is performed on an activated application via an input device such as a keyboard, a mouse, or a touch panel. Meanwhile, in the fields of VR, AR, and the like, there has been known an input form in which a user wearing a head mounted display to explore a virtual space operates a controller in a state where the controller is held in a user's hand (for example, see Patent Document 1).

### CITATION LIST

### PATENT DOCUMENT

Patent Document 1: Japanese Patent Application Laid-Open No. 2019-46291

### SUMMARY OF THE INVENTION

### PROBLEMS TO BE SOLVED BY THE INVENTION

An object of the present disclosure is to provide an information processing apparatus, an information processing method, a computer program, and an augmented reality system capable of processing information regarding augmented reality.

### SOLUTIONS TO PROBLEMS

According to a first aspect of the present disclosure, an information processing apparatus include:
an acquisition unit that acquires a position of a hand and a finger gesture of a user; and
a control unit that controls a displaying operation of a display device that superimposes and displays a virtual object on a real space,
in which the control unit sets a virtual gripping point to a position having a certain offset with respect to the hand, and controls the display device to display a virtual object gripping operation on the basis of a positional relationship between the virtual gripping point and the virtual object and a contact state between fingertips.

The acquisition unit acquires the position of the hand and the finger gesture on the basis of sensor information from a sensor attached to a back of the hand, or includes a sensor attached to the back of the hand.

The acquisition unit further acquires a posture of a finger of the user, and
the control unit controls mode switching to a grip operation mode, in which the fingertips are in contact with each other to grip the virtual object, and a contact operation mode, in which a palm or a fingertip is in contact with the virtual object, on the basis of information on the posture of the finger. In addition, the control unit further controls mode switching to a button operation mode in which a virtual button is pressed with a fingertip.

According to a second aspect of the present disclosure, an information processing method includes:
an acquisition step of acquiring a position of a hand and a finger gesture of a user; and
a control step of controlling a displaying operation of a display device that superimposes and displays a virtual object on a real space,
in which in the control step, a virtual gripping point is set to a position having a certain offset with respect to the hand, and the display device is controlled to display a virtual object gripping operation on the basis of a positional relationship between the virtual gripping point and the virtual object and a contact state between fingertips.

According to a third aspect of the present disclosure, a computer-readable computer program for causing a computer to function as:
an acquisition unit that acquires a position of a hand and a finger gesture of a user; and
a control unit that controls a displaying operation of a display device that superimposes and displays a virtual object on a real space,
in which the control unit sets a virtual gripping point to a position having a certain offset with respect to the hand, and controls the display device to display a virtual object gripping operation on the basis of a positional relationship between the virtual gripping point and the virtual object and a contact state between fingertips.

The computer program according to the third aspect of the present disclosure defines a computer program described in a computer-readable format to realize predetermined processing on a computer. In other words, by installing the computer program according to the third aspect of the present disclosure on the computer, the computer program exhibits a cooperative action on the computer, making it possible to obtain the same effects as the information processing apparatus according to the first aspect of the present disclosure.

According to a fourth aspect of the present disclosure, an augmented reality system includes:
a display device that superimposes and displays a virtual object on a real space;
an acquisition unit that acquires a position of a hand and a finger gesture of a user; and
a control unit that controls a displaying operation of the display device,
in which the control unit sets a virtual gripping point to a position having a certain offset with respect to the hand, and controls the display device to display a virtual object gripping operation on the basis of a positional relationship between the virtual gripping point and the virtual object and a contact state between fingertips.

Meanwhile, the "system" mentioned herein refers to a logical assembly of a plurality of devices (or functional modules that realize specific functions), and it does not matter whether or not each of the devices or functional modules is in a single housing.

### EFFECTS OF THE INVENTION

According to the present disclosure, it is possible to provide an information processing apparatus, an information processing method, a computer program, and an augmented reality system capable of implementing an interaction of a user's hand or finger with a virtual object.

Note that the effects described in the present specification are merely examples, and the effects caused by the present disclosure are not limited thereto. Furthermore, the present disclosure may further provide other effects as well as the above-described effects.

Other objects, features, and advantages of the present disclosure will become apparent from more detailed description based on the embodiments to be described later and the accompanying drawings.

### BRIEF DESCRIPTION OF DRAWINGS

Fig. 1 is a diagram illustrating a back of a user's hand on which a controller 10 is installed using a belt 11.
Fig. 2 is a diagram illustrating a palm of the user's hand on which the controller 10 is installed using the belt 11.
Fig.3 is a diagram illustrating a side surface of the user's hand on which the controller 10 is installed using the belt 11.
Fig. 4 is a diagram illustrating a state where the user wears AR glasses 41 on the head and wears controllers 42 and 43 on both hands, respectively.
Fig. 5 is a diagram illustrating an example of a functional configuration of an AR system 100.
Fig. 6 is a diagram illustrating a state where AR glasses are worn on a user's head.
Fig. 7 is a diagram illustrating an example of a configuration of an AR system 700 including AR glasses 701 and a controller 702.
Fig. 8 is a diagram illustrating an example of a configuration of an AR system 800 including AR glasses 801, a controller 802, and an information terminal 803.
Fig. 9 is a diagram illustrating an example of a specific configuration of a controller 110.
Fig. 10 is a diagram illustrating an example of a specific configuration of the controller 110.
Fig. 11 is a diagram illustrating an example of a specific configuration of the controller 110.
Fig. 12 is a diagram illustrating an example of a functional configuration of a control unit 140.
Fig. 13 is a diagram illustrating a state in which virtual objects are arranged around a user.
Fig. 14 is a diagram for explaining a mechanism for displaying a virtual object so that the AR glasses follow the movement of the user's head.
Fig. 15 is a diagram illustrating a state depending on a distance between a user's hand and a virtual object.
Fig. 16 is a diagram illustrating a state in which a user performs a virtual object gripping operation.
Fig. 17 is a diagram illustrating a state where the gripping of the virtual object is executed when fingertips are positioned on a surface of a virtual object.
Fig. 18 is a diagram illustrating a state where the gripping of the virtual object is executed when a thumb and a forefinger come into contact with each other inside a virtual object.
Fig. 19 is a diagram illustrating a state in which a virtual gripping point is set to a position having a certain offset with respect to a main body of the controller 110.
Fig. 20 is a diagram illustrating a specific example of a virtual gripping point.
Fig. 21 is a diagram illustrating a flow of gripping a virtual object using a virtual gripping point.
Fig. 22 is a diagram illustrating a flow of gripping a virtual object using a virtual gripping point.
Fig. 23 is a diagram illustrating a flow of gripping a virtual object using a virtual gripping point.
Fig. 24 is a diagram illustrating a flow of gripping a virtual object using a virtual gripping point.
Fig. 25 is a diagram illustrating a flow of gripping a virtual object using a virtual gripping point.
Fig. 26 is a diagram illustrating a flow of gripping a virtual object using a virtual gripping point.
Fig. 27 is a diagram illustrating a mode transition of the AR system 100.
Fig. 28 is a diagram illustrating postures of fingers in a grip operation mode.
Fig. 29 is a diagram illustrating postures of fingers in a contact operation mode.
Fig. 30 is a diagram illustrating a behavior according to a contact between a hand and a virtual object.
Fig. 31 is a diagram illustrating a behavior according to a contact between a hand and a virtual object.
Fig. 32 is a diagram illustrating postures of fingers in a button operation mode.
Fig. 33 is a diagram illustrating a mode transition of the AR system 100.
Fig. 34 is a diagram illustrating a state in which a virtual pressing point is set to a fingertip in the button operation mode.
Fig. 35 is a diagram illustrating a state in which a virtual button is pressed in the button operation mode.
Fig. 36 is a flowchart illustrating a processing procedure for determining an operation mode taken by a user.
Fig. 37 is a diagram illustrating a method of performing a calibration on a virtual gripping point.
Fig. 38 is a diagram illustrating a method of performing a calibration on a virtual gripping point.
Fig. 39 is a diagram illustrating a method of performing a running calibration on a virtual gripping point.
Fig. 40 is a diagram illustrating a method of performing a running calibration on a virtual gripping point.
Fig. 41 is a diagram illustrating a method of performing a running calibration on a virtual gripping point.
Fig. 42 is a diagram illustrating a method of performing a running calibration on a virtual gripping point.
Fig. 43 is a diagram illustrating an example in which a virtual gripping point is displayed.
Fig. 44 is a diagram illustrating an example in which a virtual gripping point is displayed.
Fig. 45 is a diagram illustrating an example in which a virtual gripping point is displayed.

### MODE FOR CARRYING OUT THE INVENTION

Hereinafter, embodiments of the present disclosure will be described in detail with reference to the drawings.

### A. Configuration of System

In the fields of VR, AR, and the like, there has been known an input form in which a user wearing a head mounted display to explore a virtual space operates a controller in a state where the controller is held in a user's hand (for example, see Patent Document 1). However, it is preferable that the user can perform daily life in a real space, such as walking or gripping an object (including a real object and a virtual object), while viewing the real space through AR glasses. Thus, it is preferable that user's fingers are in a freely usable state, rather than being restrained to grip the controller or for another reason.

Furthermore, as an input method that does not restrain the user's fingers, the movement of the user's hand may be detected from an image captured by a camera. For example, bones of the user's fingers are extracted by an RGB camera or a time of flight (ToF) camera attached outwardly to the AR glasses to recognize positions and postures of the fingers or a finger gesture are recognized. However, the detection of the user's hand from the image of the camera has a problem of occlusion and a problem that the user's hand cannot be detected outside an angle of view of the camera.

Therefore, in the present disclosure, an AR system is configured so that the fingers can be freely used by installing a controller used for detecting a position of a hand, recognizing postures of fingers, recognizing a finger gesture, or the like on the user's hand. In addition, it is preferable to leave a palm free in order to grip a real object or a virtual object using the hand on which the controller is installed or to put a virtual object on the palm. Therefore, it is preferable to install the controller on the back of the hand.

Here, note that the finger gesture refers to, for example, whether fingertips of a thumb and another finger (a forefinger or the like) are in contact with or separated from each other. In addition, in the present embodiment, it is essential for the controller to have a hand position detection function and a finger gesture recognition function, but it is not essential for the controller to have a finger posture recognition function.

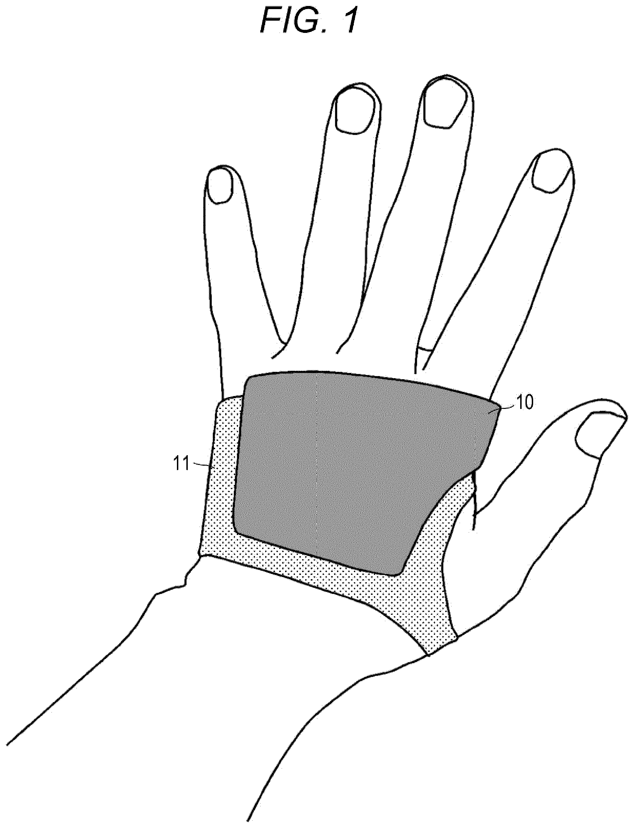

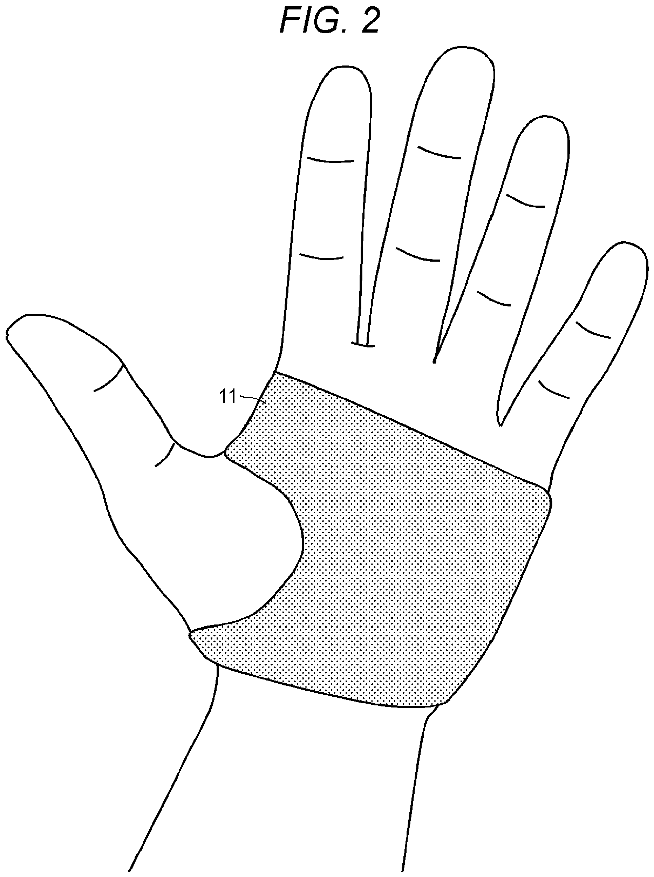

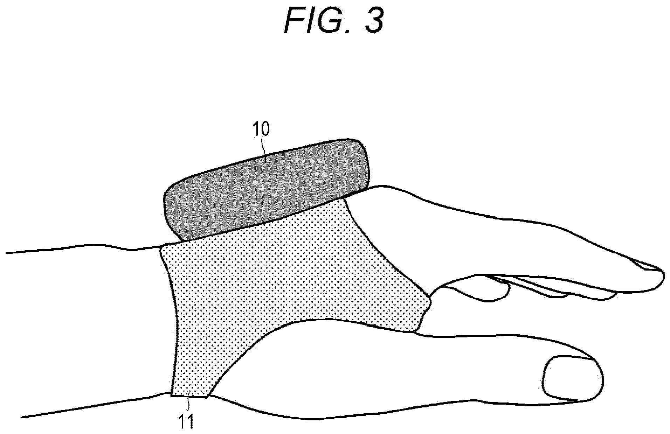

For example, the controller is installed on the back of the user's hand using a belt. Figs. 1 to 3 illustrate a back, a palm, and a side surface of a user's hand on which a controller 10 is installed using a belt 11, respectively. Of course, the fixing method is not necessarily limited to the use of the belt, and the controller may be attached to the back of the hand, for example, using an adhesive pad. Note that, although Figs. 1 to 3 illustrate an example in which the controller 10 is worn on a user's left hand, another controller 10 may also be worn on a user's right hand to be symmetrical on the left and right sides.

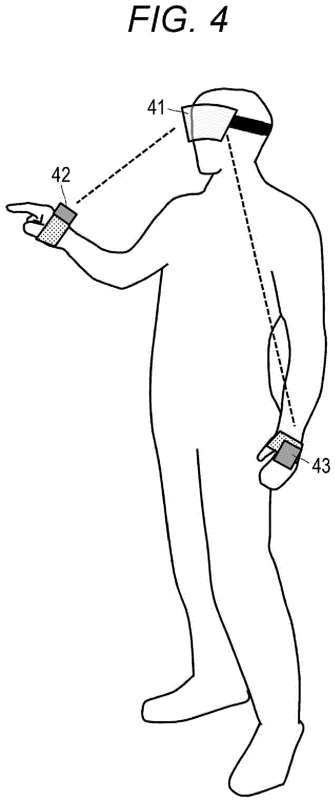

Fig. 4 illustrates a state where a user wears AR glasses 41 on the head and wears controllers 42 and 43 on both hands, respectively. As described above, each of the controllers 42 and 43 has a hand position detection function, a finger posture recognition function, and a finger gesture recognition function. Furthermore, the AR glasses 41 have a function of superimposing and displaying a virtual object on a real space.

Here, the AR glasses 41 can recognize positions of the left and right hands, postures of the left and right fingers, and gestures of the left and right fingers through the controllers 42 and 43, respectively. Furthermore, the AR glasses 41 have a function of detecting a position and a posture of the user's head. Therefore, the AR glasses 41 can detect relative positions between the user's head and the controllers 42 and 43, in other words, relative positions between the user's left and right hands. Furthermore, a coordinate position of the virtual object displayed on the AR glasses 41 in the real space is grasped, and accordingly, relative position between the user's left and right hands and the virtual object can be detected.

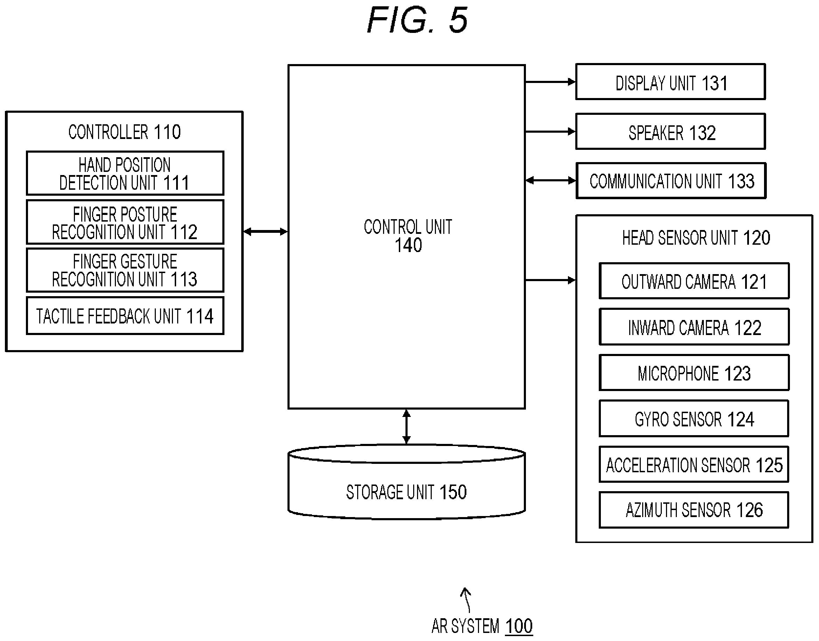

Fig. 5 illustrates an example of a functional configuration of an AR system 100 including AR glasses and a controller installed on a back of a user's hand are configured in terms of function. The AR system 100 illustrated includes a controller 110 installed on a back of a user's hand, a head sensor unit 120, a display unit 131 displaying a virtual object on the AR glasses, and a control unit 140 generally controlling an overall operation of the AR system 100. The controller 110 includes a hand position detection unit 111, a finger posture recognition unit 112, a finger gesture recognition unit 113, and a tactile feedback unit 114. The head sensor unit 120 is mounted on the AR glasses, and includes an outward camera 121, an inward camera 122, a microphone 123, a gyro sensor 124, an acceleration sensor 125, and an azimuth sensor 126. Note that only one controller 110 is illustrated in Fig. 5 for simplification of the drawing, but in a case where the controller 110 is installed on each of the user's left and right hands, the AR system 100 includes two controllers 110.

In addition, the AR system 100 may further include a speaker 132 that outputs an audio signal such as a voice related to the virtual object, and a communication unit 133 for the AR system 100 to communicate with the outside. Furthermore, the control unit 140 may be equipped with a large-scale storage unit 150 including a solid state drive (SSD) or the like.

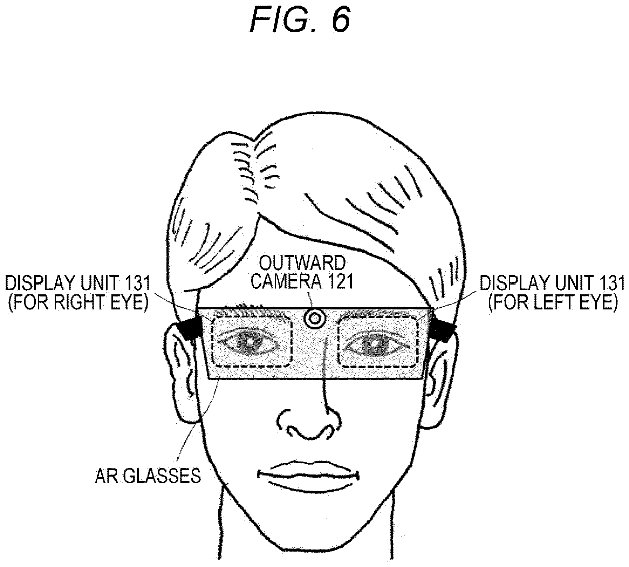

The AR glasses are generally used for an eyeglass-type or goggle-type device, and a main body of the AR glasses is worn on a user's head. The AR glasses can superimpose and display digital information on a visual field through both eyes or one eye of the user, emphasize or attenuate a specific real object, or delete a specific real object to make it appear as if it does not exist. Fig. 6 illustrates a state where AR glasses are worn on a user's head. The AR glasses illustrated include a display unit 131 for a left eye and a display unit 131 for a right eye disposed in front of user's left and right eyes, respectively. The display unit 131, which is transparent or translucent, superimposes and displays a virtual object on a real space at a predetermined position thereof, emphasizes or attenuates a specific real object, or deletes a specific real object to make it appear as if it does not exist. For example, the left and right display units 131 may be driven independently from each other, and may be configured to display a parallax image, that is, a virtual object in 3D. Furthermore, the outward camera 121 directed toward a line of sight of the user is disposed substantially at the center of the AR glasses.

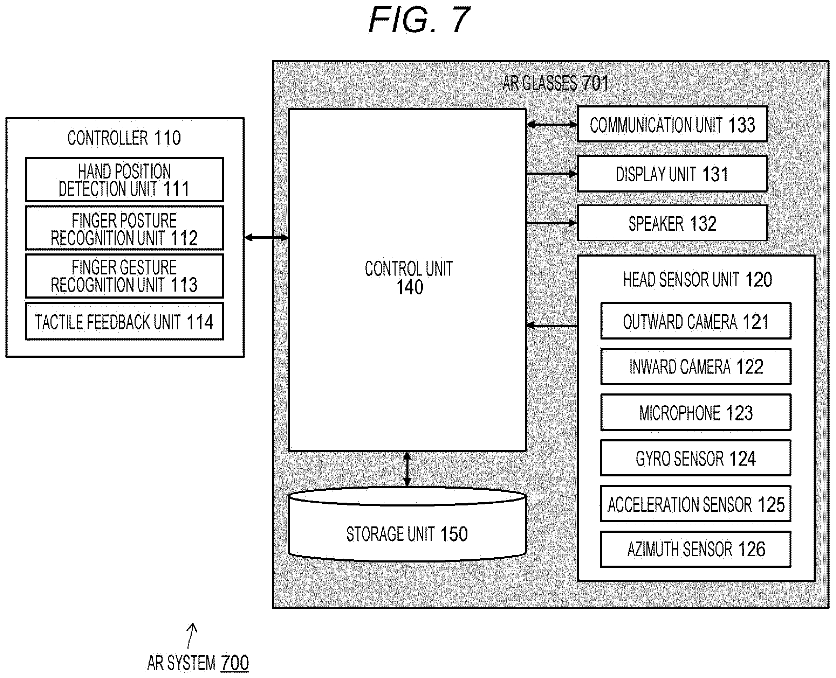

The AR system 100 can include two devices, for example, AR glasses worn on the user's head and a controller worn on the back of the user's hand. However, in a case where controllers are installed on the backs of the user's right and left hands, the AR system 100 includes three devices, AR glasses and two controllers. Fig. 7 illustrates an example of a configuration of an AR system 700 including AR glasses 701 and a controller 110. The AR glasses 701 include a control unit 140, a storage unit 150, a head sensor unit 120, a display unit 131, a speaker 132, and a communication unit 133. In addition, the controller 110 includes a hand position detection unit 111, a finger posture recognition unit 112, a finger gesture recognition unit 113, and a tactile feedback unit 114.

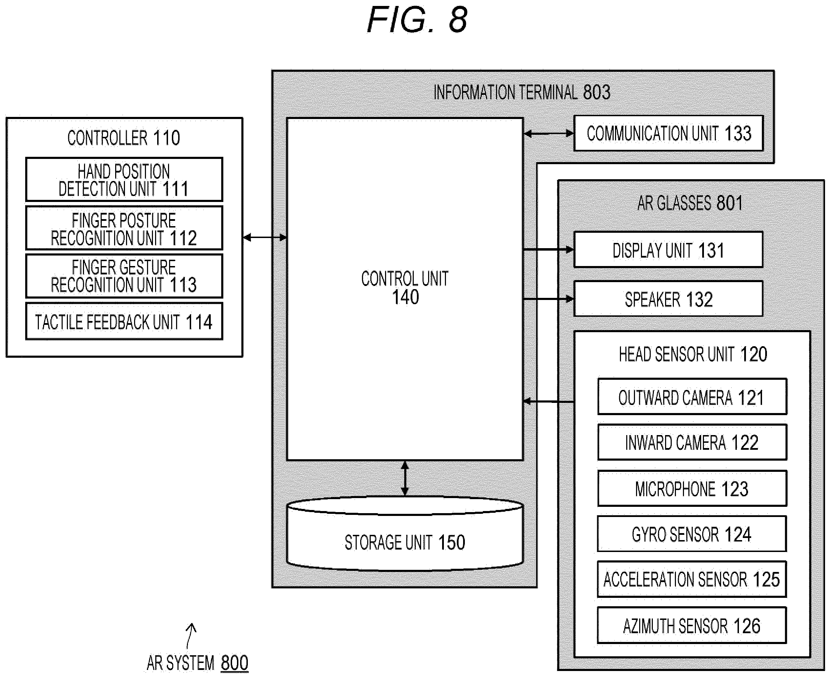

As another example of configuration, the AR system 100 includes three devices, AR glasses worn on the user's head, a controller worn on the back of the user's hand, and an information terminal such as a smartphone or a tablet PC. Fig. 8 illustrates an example of a configuration of an AR system 800 including AR glasses 801, a controller 110, and an information terminal 803. The AR glasses 801 include a display unit 131, a speaker 132, and a head sensor unit 120. The controller 110 includes a hand position detection unit 111, a finger posture recognition unit 112, a finger gesture recognition unit 113, and a tactile feedback unit 114. Furthermore, the information terminal 803 includes a control unit 140, a storage unit 150, and a communication unit 133.

Note that the specific device configuration of the AR system 100 is not limited to that illustrated in Fig. 7 or 8. Furthermore, the AR system 100 may further include components other than those illustrated in Fig. 1.

Each component of the AR system 100 will be described with reference to Fig. 5.

The controller 110 includes a hand position detection unit 111, a finger posture recognition unit 112, a finger gesture recognition unit 113, and a tactile feedback unit 114.

The hand position detection unit 111 detects a position of a user's hand. The finger posture recognition unit 112 recognizes a posture of a user's finger. In the present embodiment, the finger posture recognition unit 112 is not essential. Furthermore, the finger gesture recognition unit 113 recognizes a finger gesture, for example, whether fingertips of a thumb and another finger (a forefinger or the like) are in contact with or separated from each other.

The tactile feedback unit 114 is configured, for example, by arranging electromagnetic or piezoelectric vibrators in an array form, to providing a tactile feedback by giving vibrations onto the back of the user's hand. In the present embodiment, the tactile feedback unit 114 is provided in the controller 110 installed on the back of the user's hand. However, the tactile feedback unit 114 may be attached to one or more sites other than the back of the hand on the user's body to give vibrations.

The head sensor unit 120 is mounted on the AR glasses, and includes an outward camera 121, an inward camera 122, a microphone 123, a gyro sensor 124, an acceleration sensor 125, and an azimuth sensor 126.

The outward camera 121 includes, for example, an RGB camera, and is installed to image the outside of the AR glasses, that is, a forward direction of the user wearing the AR glasses. The outward camera 121 can image an operation using the user's fingers, but cannot image an operation using the user's fingers in a case where the user's fingers are hidden behind an obstacle, in a case where the fingertips are hidden by the back of the hand, in a case where the user puts the hand behind the body, or the like. In addition, the outward camera 121 may further include any one of an IR camera including an IR light emitting unit and an IR light receiving unit and a ToF camera. In a case where the IR camera is used for the outward camera 121, a retroreflective material is attached to an object to be captured, such as the back of the hand, and the IR camera emits infrared light and receives infrared light reflected from the retroreflective material. Alternatively, the IR camera receives a dot pattern or the like from a marker that emits infrared light or a plurality of IR light sources installed on the controller. An image signal imaged by the outward camera 121 is transferred to the control unit 140.

The microphone 123 may include a single sound collection element or a microphone array of a plurality of sound collection elements. The microphone 123 collects a voice of the user wearing the AR glasses and a sound around the user. An audio signal collected by the microphone 123 is transferred to the control unit 140.

The gyro sensor 124, the acceleration sensor 125, and the azimuth sensor 126 may be configured by an IMU. Sensor signals of the gyro sensor 124, the acceleration sensor 125, and the azimuth sensor 126 are transferred to the control unit 140. On the basis of these sensor signals, the control unit 140 can detect a position and a posture of the head of the user wearing the AR glasses.

The display unit 131 is constituted by a transmission type display (an eyeglass lens or the like) installed in front of both eyes or one eye of the user wearing the AR glasses, and is used to display a virtual space. Specifically, the display unit 131 expands a real space viewed from the user by displaying information (a virtual object) or by emphasizing, attenuating, or deleting a real object. The display unit 131 performs a displaying operation on the basis of a control signal from the control unit 140. Furthermore, a mechanism for the display unit 131 to display the virtual object in a see-through manner is not particularly limited.

The speaker 132 includes a single sound generation element or an array of a plurality of sound generation elements, and is installed, for example, in the AR glasses. For example, a voice related to the virtual object to be displayed by the display unit 131 is output from the speaker 132, but another type of audio signal may be output.

The communication unit 133 has a wireless communication function such as Wi-Fi (registered trademark) or Bluetooth (registered trademark). The communication unit 133 mainly performs a communication operation for realizing data exchange between the control unit 140 and an external system (not shown).

The control unit 140 is installed in the AR glasses or disposed in a device (a smartphone or the like) separated from the AR glasses together with the storage unit 150 and a driving power source such as a battery. The control unit 140 executes various programs read out from the storage unit 150 to perform various processes.

### B. Configuration of Controller

The controller 110 is an input device for the AR system 100 according to the present embodiment, corresponding to a keyboard, a mouse, a touch panel, or the like in an OS such as Windows or Linux (registered trademark). As illustrated in Figs. 1 to 3, the controller 110 is installed on the back of the user's hand when used. Therefore, the user can freely use the fingers because the fingers are not restrained by the controller 110. For example, the user can grip a real object or a virtual object using the hand on which the controller 110 is installed, or put a virtual object on the palm.

The controller 110 is a device that performs an input to the AR system 100 on the basis of the position of the hand, the posture of the finger, and the posture of the finger of the user. Therefore, as illustrated in Figs. 5, 7, and 8, the controller 110 includes a hand position detection unit 111, a finger posture recognition unit 112, and a finger gesture recognition unit 113. The hand position detection unit 111 detects a position of a user's hand. The finger posture recognition unit 112 recognizes a posture of a user's finger. The finger gesture recognition unit 113 recognizes a finger gesture, for example, whether fingertips of a thumb and another finger (a forefinger or the like) are in contact with or separated from each other. In addition, the controller 110 includes a tactile feedback unit 114 that generates a tactile sensation to the back of the user's hand by giving vibrations. Hereinafter, examples of specific configurations of the hand position detection unit 111, the finger posture recognition unit 112, and the finger gesture recognition unit 113 will be described.

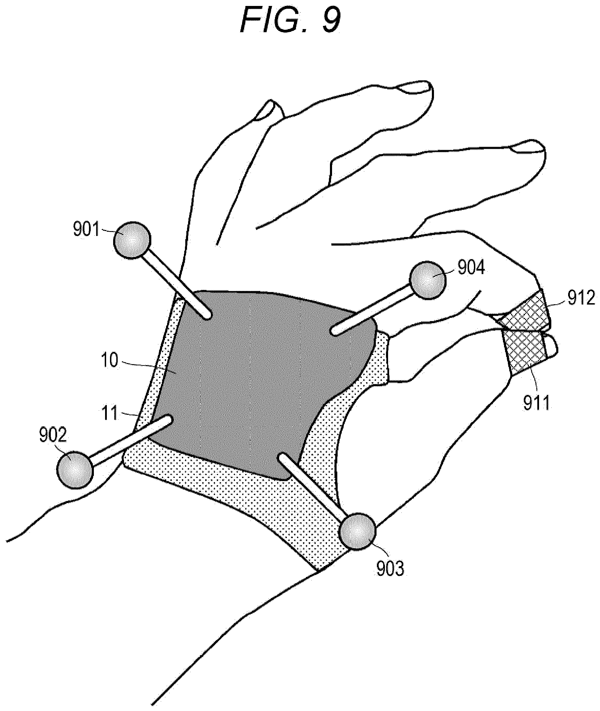

Fig. 9 illustrates examples of configurations of the hand position detection unit 111 and the finger gesture recognition unit 113. Meanwhile, in the example illustrated in Fig. 9, the controller 110 may include a finger posture recognition unit 112, or may not include a finger posture recognition unit 112. Here, the finger posture recognition unit 112 will not be described.

In the example illustrated in Fig. 9, the hand position detection unit 111 uses an IR detection scheme. That is, the hand position detection unit 111 is configured by combining a plurality of IR reflection markers 901 to 904 (four IR reflection markers in the example illustrated in Fig. 9) attached to a housing 10 of the controller 110 and an IR camera (not shown) provided in the AR glasses (or the head sensor unit 120). The IR camera includes an IR transmission unit and an IR reception unit, such that an IR signal output from the IR transmission unit can be reflected by each of the IR reflection markers 901 to 904, and the reflected IR signal can be received by the IR reception unit, thereby detecting a bright spot of each of the IR reflection markers 901 to 904. Then, a position and a posture of the main body 10 of controller 110 (or the back of the user's hand) can be detected on the basis of information on positions of the bright spots. The IR camera is preferably a stereo camera including a plurality of IR reception units.

Furthermore, the finger gesture recognition unit 113 recognizes a finger gesture, for example, whether fingertips of a thumb and another finger (a forefinger or the like) are in contact with or separated from each other. In the example illustrated in Fig. 9, the finger gesture recognition unit 113 uses an electrode detection scheme. Electrodes 911 and 912 are attached to the fingertips of the user's thumb and forefinger, respectively. Then, when the thumb and the forefinger come into contact with each other, the electrode 911 and the electrode 912 become an electrical conduction state therebetween. Thus, a gesture between the thumb and the forefinger can be recognized on the basis of the electrical conduction state between the electrode 911 and the electrode 912.

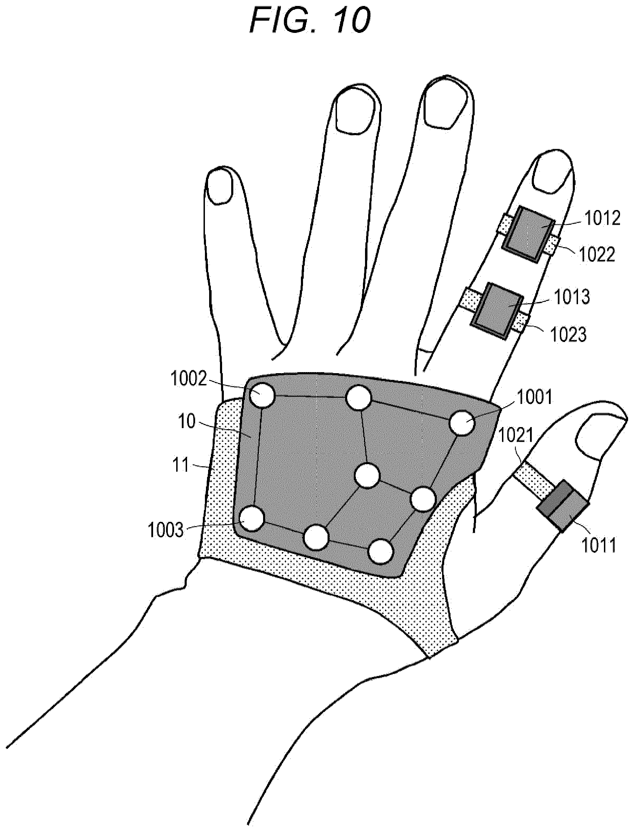

Furthermore, Fig. 10 illustrates other examples of configurations of the hand position detection unit 111, the finger posture recognition unit 112, and the finger gesture recognition unit 113.

In the example illustrated in Fig. 10, the hand position detection unit 111 detects a position of the user's hand by combining the IR detection scheme and an IMU detection scheme. In the IR detection scheme, IR reflection signals of a plurality of IR reflection markers 1001, 1002, 1003,... attached to the housing 10 of the controller 110 are captured by an IR camera (not shown) provided in the AR glasses (or the head sensor unit 120), and a position and a posture of the user's hand are detected on the basis of positions of bright spots of the respective IR reflection markers. In the IMU detection scheme, a position and a posture of the user's hand are detected on the basis of a detection signal of an inertial measurement unit (IMU) built in the main body 10 of the controller 110. The IMU includes a gyro sensor, an acceleration sensor, and an azimuth sensor. The IR detection scheme is used when the controller 110 is within the field of view of the IR camera, and the IMU scheme is used when the controller 110 is out of the field of view of the IR camera (including a case where occlusion occurs).

Furthermore, in the example illustrated in Fig. 10, the finger posture recognition unit 112 includes IMUs attached to several locations of the user's fingers. Specifically, IMUs 1011, 1012, and 1013 are attached to three locations, i.e., the thumb, a metacarpophalangeal joint of the forefinger, and an interphalangeal joint of the forefinger, by bands 1021, 1022, and 1023, respectively. The control unit 140 can measure a posture of the thumb, a posture of the metacarpophalangeal joint of the forefinger, and a posture of the interphalangeal joint of the forefinger (or an angle of a second joint of the forefinger) on the basis of detection signals of the IMUs 1011, 1012, and 1013, respectively. Meanwhile, other IMUs may be further attached to other places of the thumb and the forefinger, and other IMUs may be attached to fingers other than the thumb and the forefinger. In addition, the means for fixing the IMU to each finger is not limited to the band.

Furthermore, the finger gesture recognition unit 113 recognizes a finger gesture, for example, whether fingertips of a thumb and another finger (a forefinger or the like) are in contact with or separated from each other, separately from angles of joints of the fingers recognized by the finger posture recognition unit 112. In the example illustrated in Fig. 10, the finger gesture recognition unit 113 uses a capacitance detection scheme. Although not illustrated in Fig. 10, electrodes for detecting a capacitance are installed at two locations, i.e., a fingertip or an intermediate joint portion of each finger and the palm, or an intermediate joint portion of the thumb and an intermediate joint portion of the forefinger. For example, when the fingertips of the thumb and the forefinger are located far away from each other, the capacitance increases, and when the fingertips of the thumb and the forefinger approach each other, the capacitance decreases. Therefore, the finger posture recognition unit 112 can recognize a gesture between the thumb and the forefinger according to a change in capacitance between the fingertips of the thumb and the forefinger.

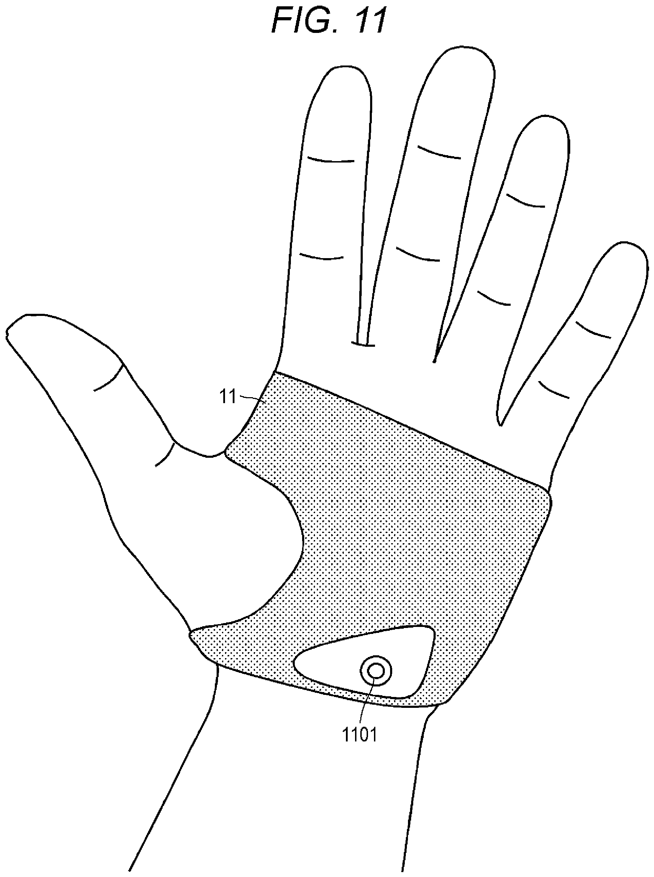

Furthermore, Fig. 11 illustrates other examples of configurations of the hand position detection unit 111, the finger posture recognition unit 112, and the finger gesture recognition unit 113. Meanwhile, the hand position detection unit 111 and the finger gesture recognition unit 113 are configured similarly to those in Fig. 10. Thus, the hand position detection unit 111 and the finger gesture recognition unit 113 are not described and illustrated here, and the finger posture recognition unit 112 will be described.

In the example illustrated in Fig. 11, the finger posture recognition unit 112 includes a ToF camera 1101 installed on a palm using a belt 11. The ToF camera 1101 can be installed at a wide angle, for example, near a wrist to capture five fingers. The control unit 140 can recognize a bone of each finger on the basis of a depth image from the ToF camera 1201 to acquire a posture of the finger. A finger gesture such as a contact between the fingertips of the thumb and the forefinger may also be recognized by recognizing bones, but in order to further improve detection accuracy, it is preferable that the finger gesture is recognized using the capacitance detection scheme described above. For example, when a capacitive contact sensor is disposed near the center of the palm using a belt 11, it is possible to recognize an approach or a contact of each of a forefinger, a middle finger, a ring finger, and a little finger toward/on the palm or a gripping gesture using these four fingers.

Note that the configurations of the hand position detection unit 111, the finger posture recognition unit 112, and the finger gesture recognition unit 113 included in the controller 110 are not necessarily limited to what has been described above. If a position of the back of the hand can be detected with higher accuracy than a position of the finger, configurations other than the above-described configurations can be applied to the controller 110. For example, in a case where the controller 110 alone is capable of estimating a self-position by performing simultaneous localization and mapping (SLAM), or if the controller 110 is configured to detect a position of the hand with high accuracy and robustness in the finger recognition using a camera (an RGB stereo camera, a ToF camera, or the like) of the head sensor unit 120, the controller 110 may have configurations other than the above-described configurations. Furthermore, in any of the configurations illustrated in Figs. 9 to 11, the controller 110 may include a speaker for outputting a sound, and a light emitting diode (LED) or a display for presenting a state of the controller and information.

### C. Basic Operation Of AR Glasses

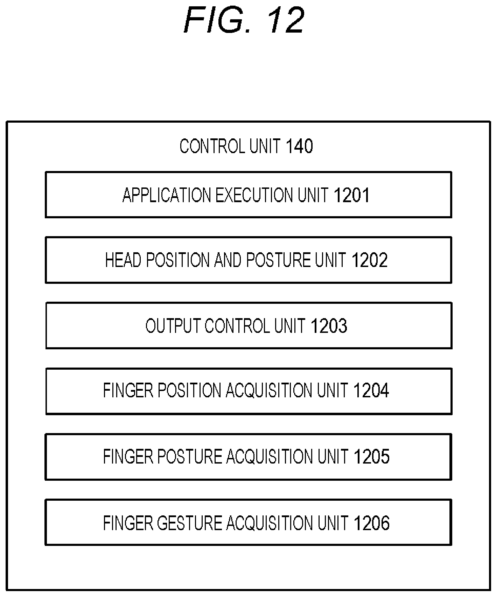

Fig. 12 schematically illustrates an example of a functional configuration of the control unit 140. In the illustrated example, the control unit 140 includes an application execution unit 1201, a head position and posture acquisition unit 1202, an output control unit 1203, a hand position acquisition unit 1204, a finger posture acquisition unit 1205, and a finger gesture acquisition unit 1206. These functional modules are implemented by the control unit 140 executing various programs read out from the storage unit 150. Meanwhile, Fig. 12 illustrates only the minimum functional modules necessary for realizing the present disclosure, and the control unit 140 may further include other functional modules.

The application execution unit 1201 executes application programs including an AR application under an execution environment provided by the OS. The application execution unit 1201 may simultaneously execute a plurality of application programs in parallel. The AR application, which is an application such as a video player or a 3D object viewer, superimposes and displays a virtual object in a field of view of a user wearing AR glasses (see Fig. 6) on the head, emphasizes or attenuates a specific real object, or deletes a specific real object to make it appear as if it does not exist. The application execution unit 1201 also controls an operation of displaying the AR application (a virtual object) using the display unit 131. In addition, the application execution unit 1201 also controls a gripping interaction of the user with respect to the virtual object on the basis of an operation using the fingers acquired through the controller 110. The virtual object gripping operation will be described in detail later.

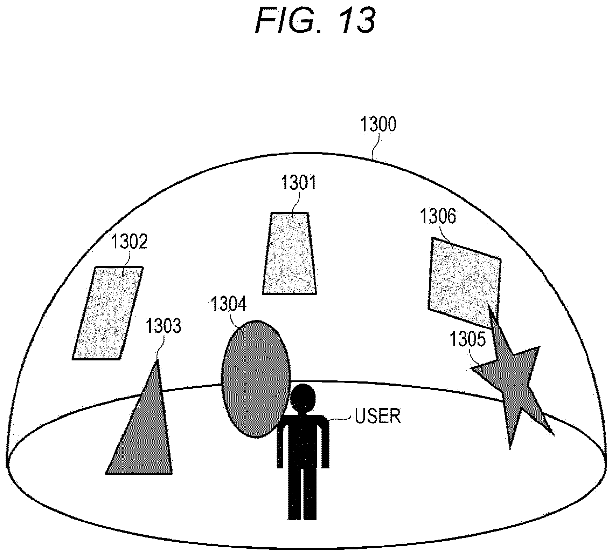

Virtual objects generated by the AR application are arranged all around the user. Fig. 13 schematically illustrates a state where a plurality of virtual objects 1301, 1302, 1303,... are arranged around the perimeter 1300 of the user wearing the AR glasses on the head. The application execution unit 1201 arranges each of the virtual objects 1301, 1302, 1303,... around the user with a position of the head or a center position of the body of the user estimated on the basis of sensor information from the head sensor unit 120 as a reference.

The head position and posture detection unit 1202 detects a position and posture of the user's head on the basis of a sensor signal from each of the gyro sensor 124, the acceleration sensor 125, and the azimuth sensor 126 included in the head sensor unit 120 mounted on the AR glasses, and furthermore recognizes a direction of a line of sight or a range of a visual field of the user.

The output control unit 1203 controls outputs of the display unit 131, the speaker 132, and the tactile feedback unit 114 on the basis of a result of executing an application program such as an AR application by the application execution unit 1201. For example, the output control unit 1203 specifies a user's visual field range on the basis of a detection result of the head position and posture detection unit 1202, and controls a virtual object displaying operation of the display unit 131 so that the user observes the virtual object arranged in the visual field range through the AR glasses, that is, so as to follow the movement of the user's head.

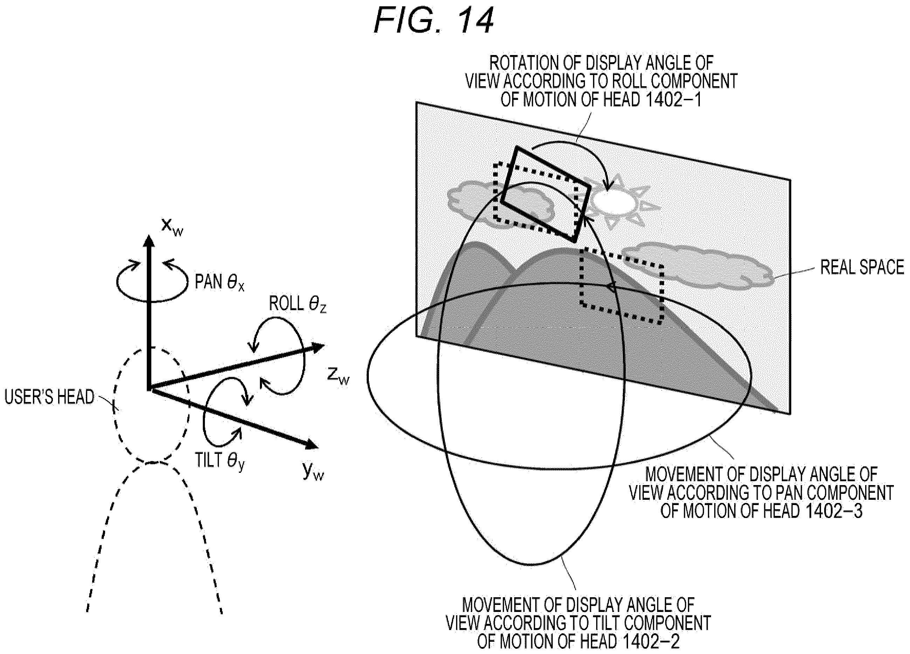

A mechanism for displaying the virtual object so that the AR glasses follow the movement of the user's head will be described with reference to Fig. 14. In Fig. 14, a depth direction of a user's line of sight is defined as a z_{w} axis direction, a horizontal direction is defined as a y_{w} axis direction, and a vertical direction is defined as an x_{w} axis direction, and an origin position of a user's reference axis x_{w}y_{w}z_{w} is a position of a user's viewpoint. A roll θ_{z} corresponds to a motion of the user's head in the z_{w} axis direction, a tilt θ_{y} corresponds to a motion of the user's head in the y_{w} axis direction, and a pan θ_{z} corresponds to a motion of the user's head in the x_{w} axis direction. The head position and posture detection unit 1202 detects posture information including movement of the user's head in each of the roll, tilt, and pan (θ_{z}, θ_{y}, and θ_{z}) directions and parallel movement of the head, on the basis of sensor signals from the gyro sensor 124, the acceleration sensor 125, and the azimuth sensor 126. Then, the output control unit 1203 moves a display angle of view of the display unit 131 to follow the posture of the user's head in the real space (for example, see Fig. 13.) in which the virtual object is arranged, and displays an image of the virtual object existing in the display angle of view on the display unit 131. Specifically, the display angle of view is moved to counteract the movement of the user's head by rotating a region 1402-1 according to a roll component of the motion of the user's head, moving a region 1402-2 according to a tilt component of the motion of the user's head, or moving a region 1402-3 according to a pan component of the motion of the user's head. Therefore, since the virtual object arranged at the display angle of view moved to follow the position and posture of the user's head is displayed on the display unit 131, the user can observe the real space on which the virtual object is superimposed through the AR glasses.

The hand position acquisition unit 1204, the finger posture acquisition unit 1205, and the finger gesture acquisition unit 1206 acquire information on a position of the hand, postures of the fingers, and a gesture taken by the fingers of the user in cooperation with the hand position detection unit 111, the finger posture recognition unit 112, and the finger gesture recognition unit 112 of the controller 110, respectively. Note that, in a case where the user's hand is within the visual field of the outward camera 121, information on a position of the hand, postures of the fingers, and a gesture taken by the fingers of the user can be acquired on the basis of a result of recognizing an image captured by the outward camera 121.

### D. Virtual Object Gripping Operation

In the real space, an object can be taken in a picking manner, in a holding manner, or the like, and a shape of the object is changed by a force applied from a picking or holding hand. On the other hand, in the virtual space, since an object does not actually exist, a hand passes through the object, and thus, it is not possible to hold the object in the same manner as in the real space. For example, an augmented reality system may also be considered by providing a user interface (UI) such that an object in the virtual space is picked by a fingertip by thrusting at the object with a finger or putting a finger on a frame provided on an outer periphery of the object.

In this regard, the present disclosure provides an operation method for a user to grip a virtual object using the controller 110. The wording "using the controller 110" means that a hand with the controller 110 installed on the back thereof is used. Therefore, the control unit 140 (or the application execution unit 1201 controlling a display of a virtual object) can acquire a position of the hand that performs an operation to grip the virtual object, a finger gesture, and positions and postures of fingers through the controller 110 at all times.

Note that, in the following description, for the sake of simplicity, the illustration of the controller 110 installed on the back of the hand that performs a virtual object gripping operation will be omitted. In addition, the description regarding processing for acquiring a position of the hand, a finger gesture, and positions and postures of fingers using the controller 110 will be omitted.

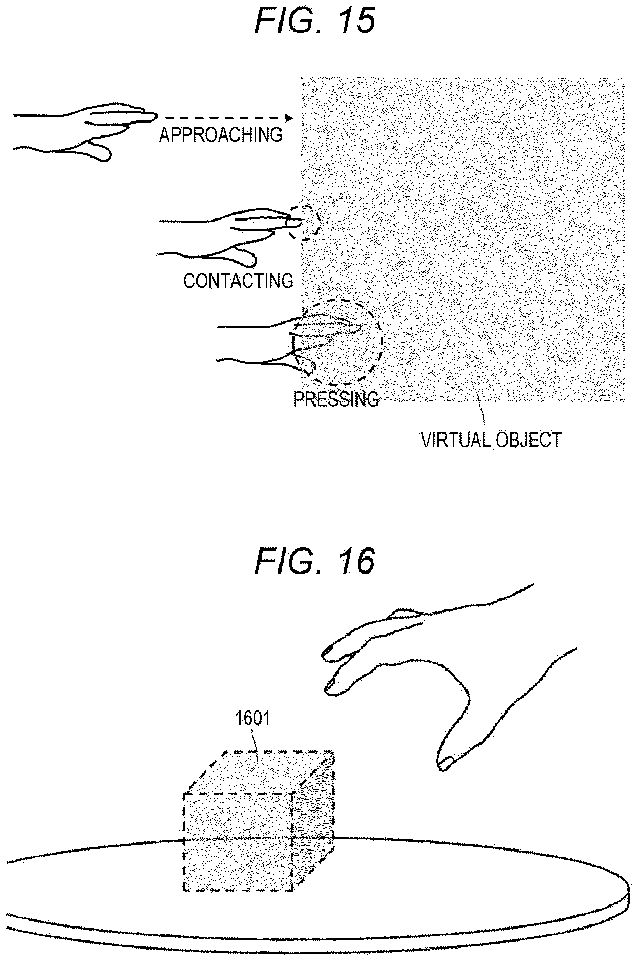

In addition, three states including "approaching", "contacting", and "pressing" are defined to indicate a distance between the user's hand and the virtual object. Fig. 15 illustrates three states, "approaching", "contacting", and "pressing". The "approaching" state is a state in which a shortest distance between the user's hand and the virtual object is equal to or smaller than a predetermined value. The "contacting" state is a state in which a shortest distance between the user's hand and the virtual object becomes zero. The "pressing" state is a state in which the user's hand interferes with a region of the virtual object.

### D-1. Basic Logic of Virtual Object Gripping Operation

Here, it is supposed that the user performs an operation for gripping a virtual object 1601 assumed to be a relatively large and heavy object as illustrated in Fig. 16. The following two patterns can be adopted as the logic of the operation for gripping the large virtual object.
(1) When fingertips are positioned on a surface of the virtual object, the gripping of the virtual object is executed.
(2) When a thumb and a forefinger come into contact with each other in a grip detection region (e.g., inside the virtual object) set for the object, the gripping of the virtual object is executed.

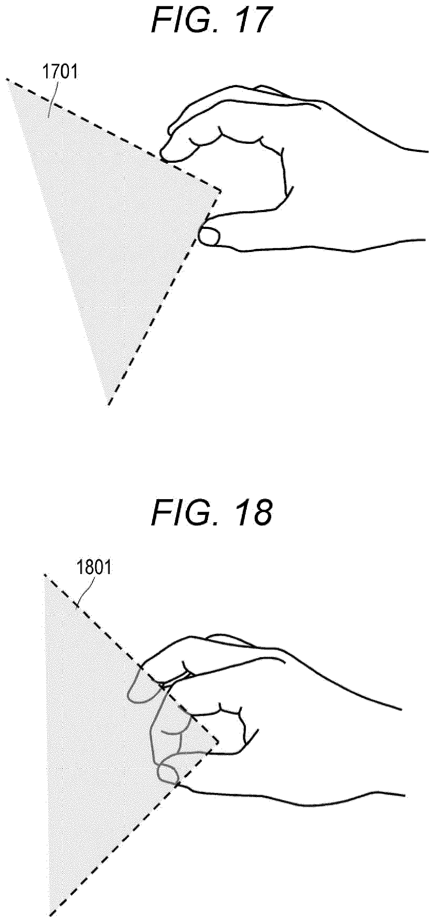

Fig. 17 illustrates a state where the gripping of the virtual object is executed according to the first logic when fingertips are positioned on a surface of a virtual object 1701. However, since the virtual object 1701 does not actually exist, even though the user's fingertips come into contact with the virtual object 1701, the fingertips are not restrained by a reaction force obtained therefrom. Since the user's fingertips pass through the virtual object 1701, the user cannot obtain a realistic touch.

In addition, Fig. 18 illustrates a state where the gripping of the virtual object is executed according to the second logic when a thumb and a forefinger come into contact with each other inside a virtual object 1801. In this case, since the fingertips of the user's thumb and the forefinger are in contact with each other, the virtual object 1801 can be recognized by the user's own tactile sensation. If a state in which the movement of the fingertips is restrained by the contact therebetween is recognize as a state in which the virtual object 1801 is gripped, the user can easily recognize a change from the gripping state to a state in which the virtual object 1801 is separated.

Therefore, the second gripping logic is superior to the first gripping operation logic in terms of determination and reality concerning the gripping of the virtual object. The present disclosure is based on the second gripping logic. Furthermore, according to the second gripping logic, it is possible to realize a virtual object gripping operation even if the controller 110 is not equipped with the finger posture recognition unit 112.

In addition, in the present disclosure, a "virtual gripping point" is set in order to suitably implement the gripping logic under which the gripping of the virtual object is executed when the fingertips come into contact with each other in a predetermined grip detection region. The virtual gripping point is a position where the fingertips used for gripping the virtual object are assumed to come into contact with each other when a gripping operation is performed at a current position of the hand. The virtual gripping point is set to a position having a certain offset with respect to the user's hand. A position of the user's hand can be detected by the hand position detection unit 111 of the controller 110 installed on the back of the hand. The hand position detection unit 111 detects a position of the main body of the controller 110 substantially equal to a position of the back of the hand. The virtual gripping point may be a position having a certain offset with respect to the main body of the controller 110 instead of the user's hand.

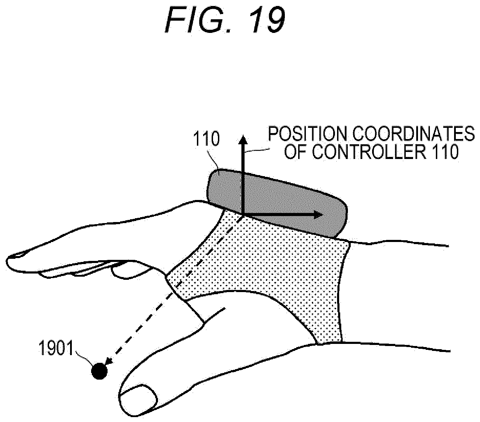

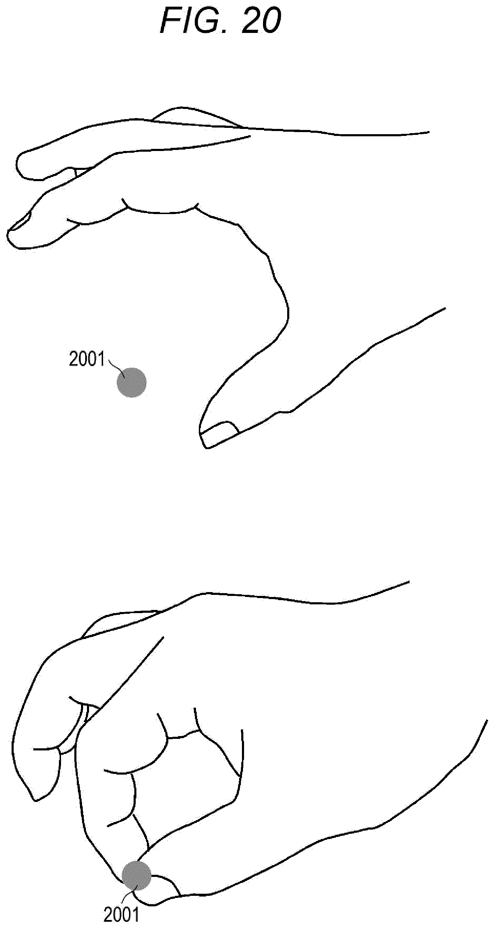

Fig. 19 illustrates a state where a virtual gripping point 1901 is set to a position having a certain offset with respect to position coordinates of the main body of the controller 110. For example, as illustrated in Fig. 20, the virtual gripping point is set to a position 2001 where the fingertips of the thumb and the forefinger are in contact with each other, in other words, a position 2001 where an object is picked using the thumb and the forefinger, at a position of the user's hand detected using the controller 110.

Then, according to the present disclosure, a gripping interaction with respect to the virtual object is executed, on the basis of a positional relationship between the virtual gripping point set to the position having a certain offset with respect to the user's hand and the virtual object displayed by the AR glasses, and a user's finger gesture. The user's finger gesture is specifically an operation for gripping the virtual object.

As described above, the user's finger gesture can be acquired by the finger gesture recognition unit 113 in the controller 110 installed on the back of the hand. When it is attempted to detect a position of the user's hand or a user's finger gesture from an image captured by the outward camera 121, accurate information may not be obtained due to occlusion or accuracy problems. In this regard, by using the controller 110 installed on the back of the hand, the position of the hand and the finger gesture can be accurately detected and recognized. Therefore, according to the present disclosure, the positional relationship between the virtual gripping point and the virtual object can be accurately detected and the gripping operation taken by the fingertips can be accurately recognized, thereby realizing an intuitive and comfortable gripping interaction with respect to the virtual object.

### D-2. Specific Flow of Gripping Virtual Object

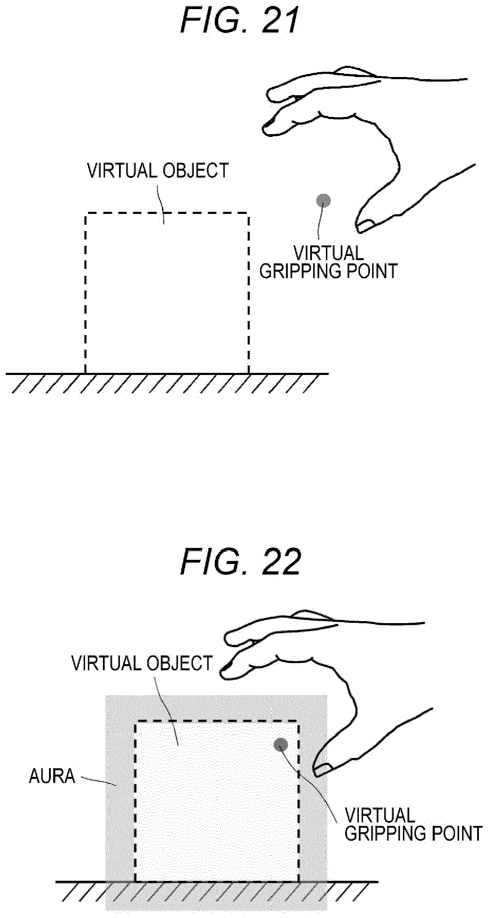

Figs. 21 to 26 sequentially illustrate a flow of gripping a virtual object using a virtual gripping point. Here, it is assumed that a user grips a virtual object placed on a desk using a hand on which the controller 110 is worn. Note that the desk may be either a real object or a virtual object. The flow of gripping the virtual object illustrated in Figs. 21 to 26 is performed by the application execution unit 1201 on the basis of the information on a position of a user's hand and a user's finger gesture acquired through the controller 110, and switching in displaying a virtual object is also performed according to a user's virtual object gripping operation.

First, as illustrated in Fig. 21, a virtual gripping point is set to a position having a certain offset with respect to the user's hand. The virtual gripping point is set to a position where fingertips of a thumb and a forefinger are in contact with each other at a current position of the user's hand, that is, a position where an object is picked using the thumb and the forefinger. A marker indicating the virtual gripping point may be displayed by the AR glasses so that the user can visually understand the set virtual gripping point. Through the AR glasses, the user can observe the virtual object and the virtual gripping point set with respect to the hand with which the virtual object is to be gripped.

Note that it is not necessary to set a virtual gripping point at all times, and the virtual gripping point may be set or displayed only when the user's hand approaches the virtual object to be gripped. It is assumed that when a shortest distance between the user's hand and the virtual object becomes equal to or smaller than a predetermined value, the user's hand approaches the virtual object. The predetermined value may be, for example, 50 cm.

When the user's hand continues to approach the virtual object to be gripped, the virtual gripping point enters a grip detection region as illustrated in Fig. 22. Here, for simplification, the grip detection region is assumed to be the same as the virtual object. The display of the virtual object is changed at a timing when the virtual gripping point enters the grip detection region. Any method may be used to change the display of the virtual object at the timing when the virtual gripping point enters the grip detection region. In an example illustrated in Fig. 22, an aura is generated around the virtual object. In addition, at the timing when the virtual gripping point enters the grip detection region, a notification sound may be generated from the speaker 132 or tactile feedback may be returned to the user's hand using the tactile feedback unit 114, together with or instead of the display of the aura.

The user can observe the virtual object and the aura around the virtual object through the AR glasses. The user can recognize that the virtual object can be gripped if the user performs a gripping operation when the aura occurs around the virtual object to be gripped. The display of the aura, the generation of the notification sound, and the giving of the tactile feedback at the timing when the virtual gripping point enters the grip detection region are similar to a mouseover in which a mouse pointer is placed on an object displayed on a screen of the OS.

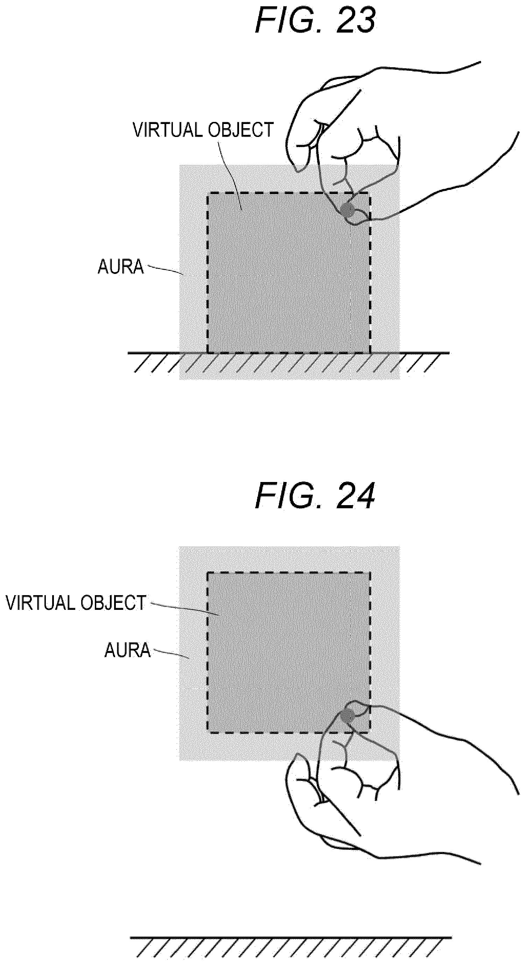

Then, as illustrated in Fig. 23, when the user performs a virtual object picking operation by bringing the fingertips of the thumb and the forefinger into contact with each other while the virtual gripping point exists in the grip detection region, gripping processing is performed. The display of the virtual object gripped by the user may be changed. In an example illustrated in Fig. 23, the virtual object in the gripped state is highlighted.

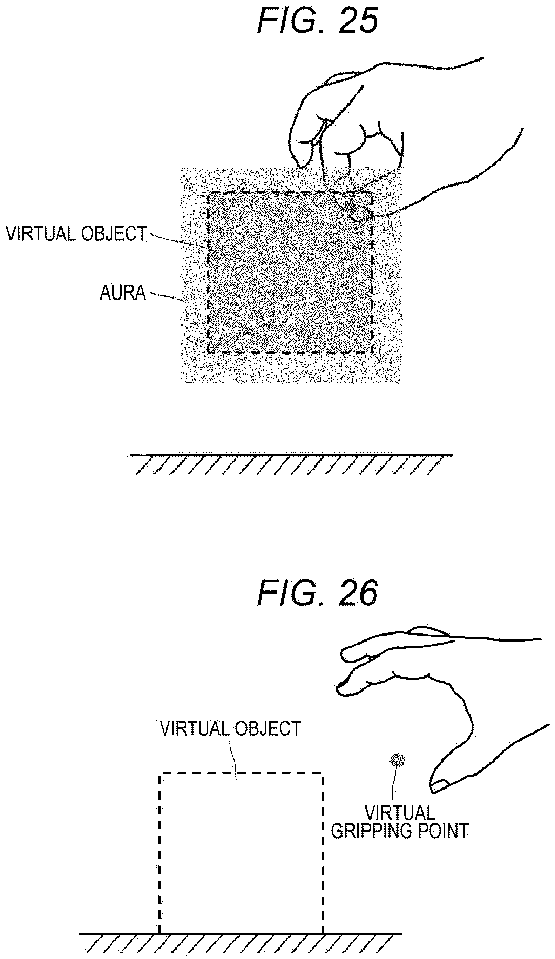

In a state where the user is gripping the virtual object while maintaining the contact between the fingertips of the thumb and the forefinger, the relative positional and postural relationship between the user's hand and the virtual object is maintained. As illustrated in Figs. 24 and 25, when the user changes the posture of the hand gripping the virtual object or lifts the hand gripping the virtual object, the posture of the virtual object is also changed or the virtual object is also lifted to follow the user's hand.

When the user releases the virtual object gripping operation by separating the fingertips of the thumb and the forefinger from each other, the virtual object can freely move without restricting the relative positional and postural relationship of the virtual object with the user's hand. For example, when the user releases the virtual object gripping operation in the state illustrated in Fig. 25, the virtual object falls due to gravity as illustrated in Fig. 26. Furthermore, when the virtual object gripping operation is released, the display of the aura and the highlight is also released.

In the flow of gripping the virtual object illustrated in Figs. 21 to 26, if a marker indicating the virtual gripping point is displayed by the AR glasses, the user can recognize that the virtual gripping point collides with the virtual object.

Note that it has been described above and illustrated in Figs. 19 to 26 that the position where the fingertips used for gripping the virtual object are assumed to come into contact with each other is indicated by a point having no region, that is, a "virtual gripping point". However, the position where the fingertips used for gripping the virtual object are assumed to come into contact with each other may be indicated by a sphere or the like having a region volume, and in this case, may be referred to as a "virtual gripping region" instead of the "virtual gripping point".

Note that the virtual object gripping operation for precise gripping such as picking the virtual object with the thumb and the forefinger has been described above. As well as the precise gripping, the object gripping method includes not only gripping with grip strength using all fingers (or entirely using the fingers) like holding but also intermediate gripping using side surfaces of fingers and gripping not using a thumb. In any gripping method, in order to stably grip an object only with one hand, it is necessary to sandwich the object between two or more surfaces facing each other of the hand. Multiple fingers may be used for one surface of the hand.

Even in a case where a virtual object is gripped by a gripping method other than the precise gripping, by setting a virtual gripping point, a gripping interaction with respect to the virtual object can be realized by a procedure similar to that in the gripping flow illustrated in Figs. 21 to 26.

### E. Switching Between Operation Modes

Next, switching between operation modes in which the user operates the virtual object in the AR system 100 will be described. An operation performed on the virtual object by the user with the fingers has different features depending on an operation mode, in other words, an intention with which the virtual object is operated. Therefore, the application execution unit 1201 can perform switching between operation modes on the basis of the postures of the user's fingers acquired through the controller 110. In a case where the switching between operation modes is performed, it is assumed that the controller 110 includes the finger posture recognition unit 112.

### E-1.2 Mode Configuration

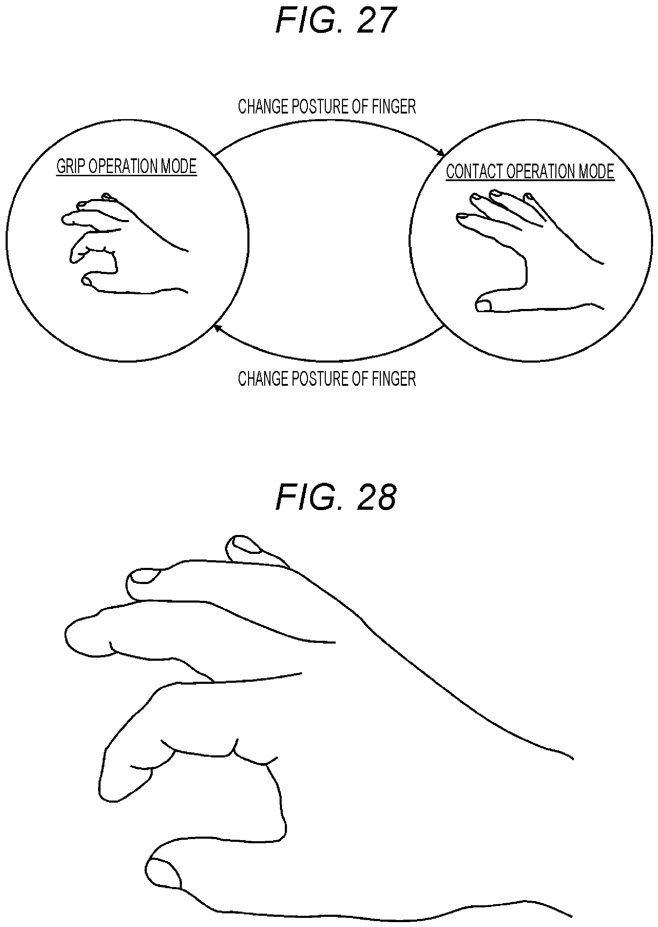

First, the switching between operation modes will be described by taking an example in which the operation modes include a "grip operation mode" in which the user intends to grip a virtual object and a "contact operation mode" (that is, a mode in which the user does not intend to grip a virtual object) as one of other modes. For example, since the controller 110 illustrated in Figs. 10 and 11 includes the finger posture recognition unit 112, the switching between operation modes can be performed on the basis of postures of fingers. Fig. 27 is a diagram illustrating a mode transition of the AR system 100 having a two-mode configuration including a grip operation mode and a contact operation mode.

The grip operation mode is an operation mode in which the user intends to grip a virtual object. When the user intends to grip a virtual object using the thumb and the forefinger, the user brings the fingertips of the thumb and the forefinger close to each other in advance, for example, as illustrated in Fig. 28. Therefore, the application execution unit 1201 can switch the AR system 100 to the grip operation mode on the basis of the postures of the thumb and the forefinger of the user acquired through the controller 110.

In the grip operation mode, the application execution unit 1201 performs the following UI operation using the AR glasses as described in Section D above.
(1) A virtual gripping point is set to a position having a certain offset with respect to the user's hand (see Fig. 21). A position of the virtual gripping point may be displayed by the AR glasses.
(2) When the virtual gripping point enters a grip detection region, the display of the virtual object is switched, and the user is notified of an entry timing (see Fig. 22).
(3) When a gripping operation is performed by the user's fingers while the virtual gripping point exists in the grip detection region, gripping processing is performed. The display of the virtual object is switched to the gripped state, and the user is notified of the gripped state (see Fig. 23).
(4) In the gripped state, the relative positional and postural relationship between the user's hand and the virtual object is maintained. A position and a posture of the virtual object are changed to follow the movement of the user's hand (see Figs. 24 and 25).
(5) When the user releases the gripping operation, the restraint of the relative positional relationship between the virtual object and the user's hand is released, and the virtual object becomes a freely movable state (see Fig. 26).

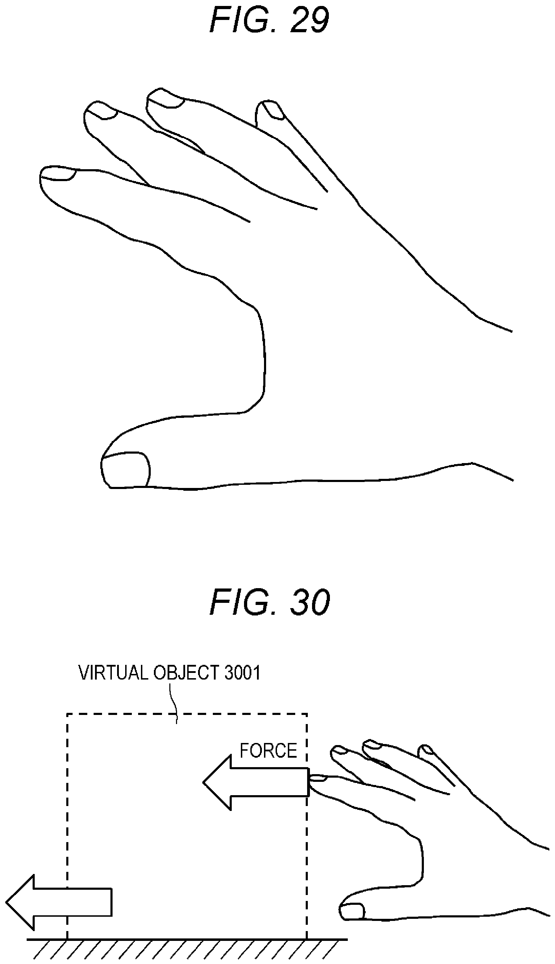

On the other hand, the contact operation mode is an operation mode in which the user does not intend to grip a virtual object. In the contact operation mode, since the user does not intend to grip a virtual object using the thumb and the forefinger, the fingertips of the thumb and the forefinger are separated from each other, for example, as illustrated in Fig. 29. The application execution unit 1201 can switch the AR system 100 to the contact operation mode on the basis of the postures of the thumb and the forefinger of the user acquired through the controller 110.

In the contact operation mode, the application execution unit 1201 sets a contact determination element called a collider, for example, on the finger, the palm, and the back of the hand of the user. As a result, a behavior according to the contact between the user's hand and the virtual object can be realized. The collider may be displayed by the AR glasses. The behavior according to the contact between the hand and the virtual object is movement, popping, acceptance, and the like of the virtual object according to the contact, and is realized similarly to a contact behavior in the real space. In the contact operation mode, a virtual gripping point and a grip detection region are not set.

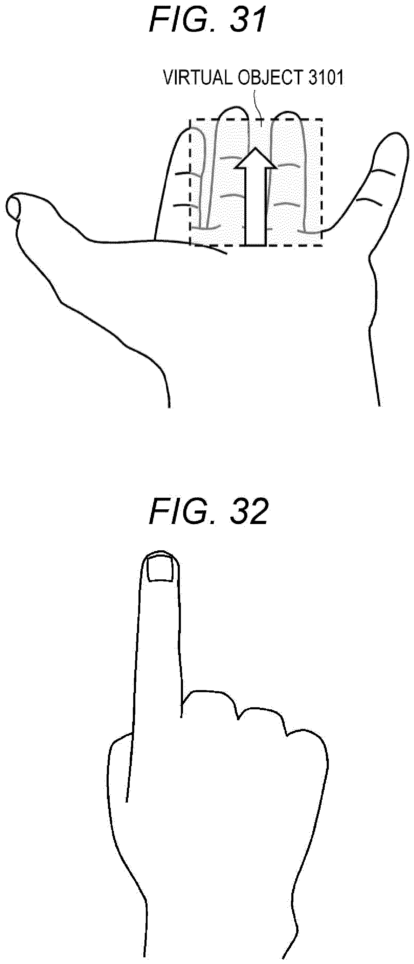

Fig. 30 illustrates a state in which the user is pressing a virtual object 3001 with the fingertip as an example of the behavior according to the contact between the hand and the virtual object. Since the virtual object 3001 does not actually exist, the fingertip passes therethrough. However, the application execution unit 1201 can set a contact determination collider at the fingertip to realize a behavior in which the virtual object 3001 moves by receiving a pressing force from the user's fingertip as illustrated in Fig. 30. Furthermore, Fig. 31 illustrates a state in which a virtual object 3101 is placed on the palm as another example. Since the virtual object 3101 does not actually exist, the virtual object falls after passing through the palm. However, the application execution unit 1201 can set a contact determination collider on the palm to realize a behavior in which the virtual object 3101 remains placed on the palm without falling by receiving a reaction force from the palm as illustrated in Fig. 31.

In the AR system 100 according to the present embodiment, the interaction between the user's finger and the virtual object is assumed to include both "holding" and "touching". In order to satisfy the request to robustly detect an interaction in conformity with the user's intention, the interaction of the user's finger is clearly classified into the grip operation mode and the contact operation mode as illustrated in Fig. 27. For example, in a case where a trigger for an interaction by a fingertip contact occurs in the air without contacting the virtual object, a virtual gripping point for the grip operation mode is deactivated, and instead, a contact determination collider for the contact operation mode is activated. At this time, the offset of the position for the virtual gripping point can be used for a position of the fingertip contact determination collider. In the case of contact, local posture information of the virtual fingertip position is also important. In a case where the virtual fingertip position is used for contact determination, it is necessary to calibrate the offset of the posture.

### E-2.3 Mode Configuration

In addition to the grip operation mode and the contact operation mode described above, the AR system 100 can further define various operation modes in which the user operates a virtual object with a hand. Also, switching between the operation modes can be performed on the basis of postures of fingers recognized through the controller 110.

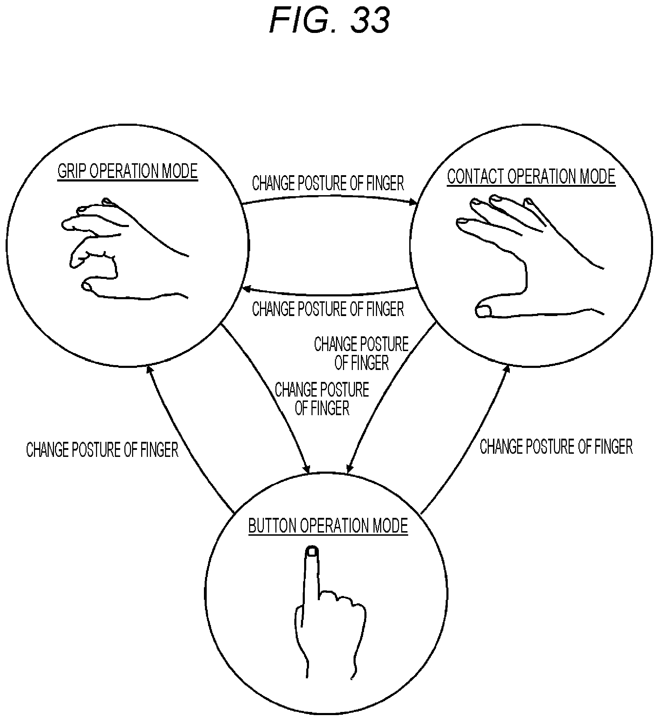

In addition to the grip operation mode and the contact operation mode described above, for example, a "button operation mode" can be further included. Fig. 33 is a diagram illustrating a mode transition of the AR system 100 having a three-mode configuration including a button operation mode in addition to the grip operation mode and the contact operation mode.

When the user intends to press a button, the user sticks the forefinger out as illustrated in Fig. 32. Therefore, when acquiring the sticking-out posture of the forefinger through the controller 110, the application execution unit 1201 can switch the AR system 100 to the button operation mode.

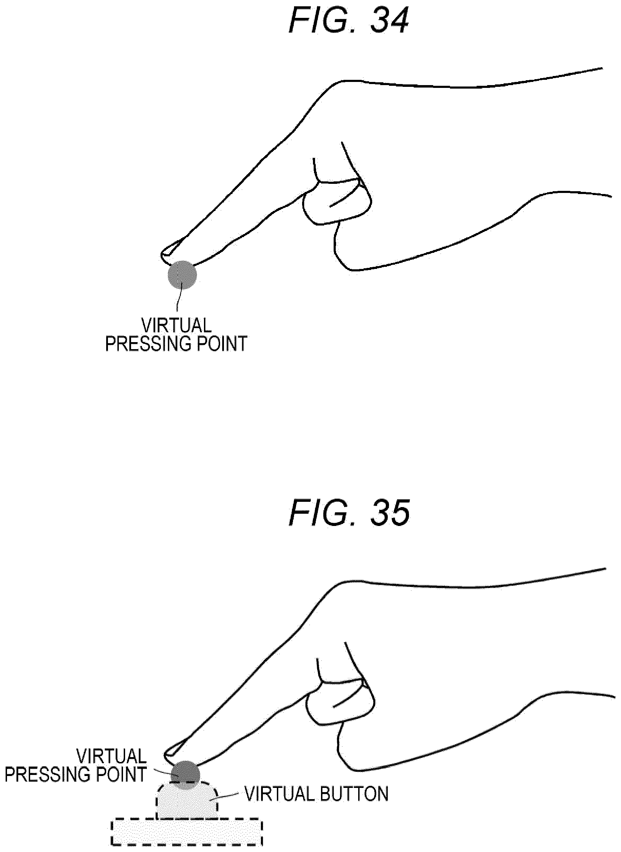

In the button operation mode, the application execution unit 1201 performs the following UI operation using the AR glasses.
(1) A virtual pressing point is set to a position on the fingertip of the forefinger (see Fig. 34), such that the virtual button can be operated. A position of the virtual pressing point may be displayed by the AR glasses.
(2) In this state, when the forefinger contacts the virtual button displayed by the AR glasses under a certain condition (see Fig. 35), the operation of the virtual button is activated.

The application execution unit 1201 can recognize that the forefinger has contacted the virtual button under the certain condition through the controller 110. Then, the application execution unit 1201 starts processing assigned to the virtual button on the basis of the recognition result.

For example, the certain condition imposed on the virtual button contacting operation is that the virtual pressing point contacts the virtual button in a direction in which the inclination from the normal direction of the virtual button falls within an error of ±45 degrees. Under this condition, an erroneous operation by a finger, such as holding the virtual button in a form corresponding to the grip operation mode or moving the virtual button in a form corresponding to the contact operation mode, hardly occurs, and the virtual button can only be operated as a UI element called a button. That is, by imposing this condition, the finger gesture for the virtual button pressing operation in the button operation mode can be accurately distinguished from the finger gesture for the virtual object picking operation in the grip operation mode and the finger gesture for contacting the virtual object in the contact operation mode. In short, the certain condition in the button operation mode is set not to be confused with an unintended button operation or an operation for moving the virtual button itself.

In the two-mode configuration illustrated in Fig. 27, it is also possible to implement processing assigned to the virtual button when a fingertip of any finger is brought into contact with the virtual button in the contact operation mode. However, in order to prevent a process malfunction caused by an unintended button operation, it is effective to adopt the three-mode configuration as illustrated in Fig. 33 and impose a certain condition on the virtual button contacting operation.

### E-3. Method of Determining Operation Mode

As described above, an operation mode of interaction with a virtual object can be determined according to postures of fingers. For example, an operation mode can be determined by using information on an opened degree between the fingers and a distance between the fingertips. A specific method of determining an operation mode will be described below.
(1) When a distance between the fingertips of the thumb and the forefinger is equal to or smaller than a predetermined value d and a deviation between orientations of tips (distal joints) of the two fingers are within a certain value, the operation mode is determined as a grip operation mode.
(2) When the above (1) is not satisfied, the metacarpophalangeal joint of the forefinger is opened by a certain angle or more, and distances between positions of the fingertips of the middle finger, the ring finger, and the little finger and the palm are all within a certain value, the operation mode is determined as a button operation mode.
(3) When none of the above (1) and (2) is satisfied, the operation mode is determined as a contact operation mode.

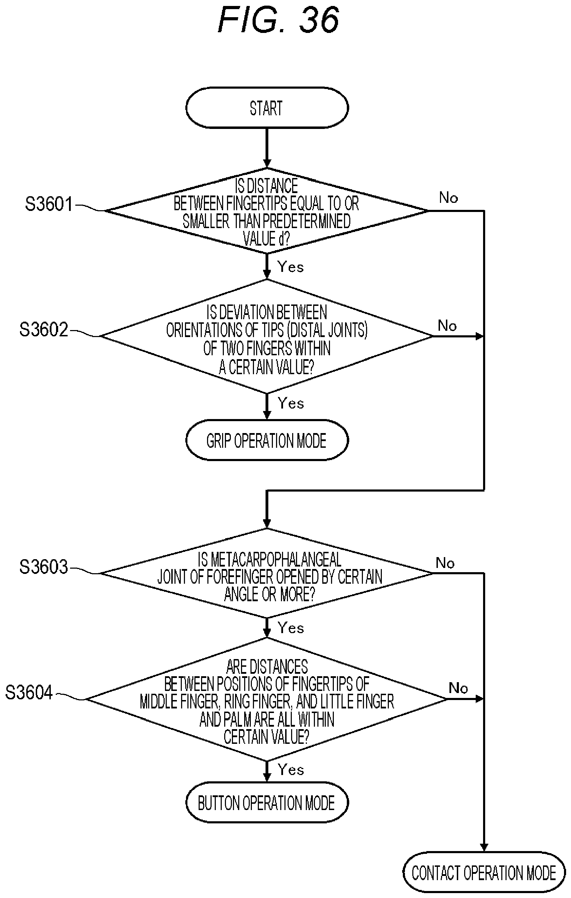

Fig. 36 illustrates a processing procedure for determining an operation mode taken by the user in the form of a flowchart. This processing procedure is executed by the application execution unit 1201 on the basis of the postures of the fingers obtained through the controller 110 installed on the back of the user's hand.

First, the application execution unit 1201 checks whether or not a distance between fingertips of a thumb and a forefinger is equal to or smaller than a predetermined value d (step S3601). Next, when the distance between the fingertips of the thumb and the forefinger is equal to or smaller than the predetermined value d (Yes in step S3601), the application execution unit further checks whether or not a deviation between orientations of tips (distal joints) of the two fingers is within a certain value (step S3602).

When the distance between the fingertips of the thumb and the forefinger is equal to or smaller than the predetermined value d (Yes in step S3601), and the deviation between the orientations of the tips (distal joints) of the two fingers is within the certain value (Yes in step S3602), the operation mode is determined as a grip operation mode.

When the operation mode is determined as a grip operation mode, the application execution unit 1201 sets a virtual gripping point at a position having a certain offset with respect to the main body of the controller 110. Also, the virtual gripping point may be presented to the user using the AR glasses.

On the other hand, when the distance between the fingertips of the thumb and the forefinger exceeds the predetermined value d (No in step S3601), or when the deviation between the orientations of the tips (distal joints) of the two fingers exceeds the certain value (No in step S3602), the application execution unit 1201 further checks whether or not the metacarpophalangeal joint of the forefinger is opened by a certain angle or more (step S3603). Next, when the metacarpophalangeal joint of the forefinger is opened by the certain angle or more (Yes in step S3603), the application execution unit further checks whether or not distances between positions of the fingertips of the middle finger, the ring finger, and the little finger and the palm are all within a certain value (step S3604).

When the metacarpophalangeal joint of the forefinger is opened by the certain angle or more (Yes in step S3603) and the distances between the positions of the fingertips of the middle finger, the ring finger, and the little finger and the palm are all within the certain value (Yes in step S3604), the application execution unit 1201 determines the operation mode as a button operation mode.

When the operation mode is determined as a button operation mode, the application execution unit 1201 sets a virtual pressing point at a position on the fingertip of the forefinger. Also, the virtual pressing point may be presented to the user using the AR glasses.

On the other hand, when the metacarpophalangeal joint of the forefinger is opened by less than the certain angle (No in step S3603), or when any of the distances between the positions of the fingertips of the middle finger, the ring finger, and the little finger and the palm exceeds the certain value (No in step S3604), the application execution unit 1201 determines the operation mode as a contact operation mode.

When the operation mode is determined as a contact operation mode, the application execution unit 1201 sets a collider on the finger, the palm, or the back of the hand of the user. Also, the collider may be presented to the user using the AR glasses.

### E-4. Method of Correcting Operation Mode Determination Result

In the operation mode determination method described in Section E-3 above, it is an essential condition of the grip operation mode that the distance between the fingertips of the thumb and the forefinger is equal to or smaller than the predetermined value d. However, when the user intends to grip a virtual object having such a shape or size that the distance between the fingertips exceeds the predetermined value d, causing an opened space between the fingertips, the postures of the fingers may be close to the contact operation mode.

As described above, there is a possibility that the application execution unit 1201 may determine an operation mode contrary to the user's intention on the basis of the postures of the fingers obtained through the controller 110. In such a case, the user may directly instruct the AR system 100 to be operated in an intended operation mode by uttering, for example, "grip operation mode". The application execution unit 1201 may switch the operation mode determined once to the operation mode directly instructed by the user on the basis of the utterance input from the microphone 123.

Furthermore, in the AR system 100 in which the finger posture recognition unit 112 is not included in the controller 110, the user may directly instruct the AR system to switch the operation mode by utterance.

### E-5. Combination of Multiple Operation Modes

In the operation mode determination method described in Section E-3 above, one of a plurality of operation modes is alternatively determined. In addition, in the diagram of Fig. 27 or 33 illustrating a mode transition, it is assumed that the AR system 100 sets any one of the operation modes. As a modification thereof, it may also be considered to combine a plurality of operation modes together to control a virtual object.

For example, in the grip operation mode, when a virtual object moves and approaches the user's hand, a collider can be set on the finger, the palm, or the back of the hand of the user as in the contact operation mode, and the virtual object can be placed on the palm on the basis of the positional relationship between the virtual object and the user's hand.

### E-6. Behavior in Response to User Operation for Object

In a situation where a virtual object is placed on a desk, it is natural to make settings such that, while the user can perform a virtual object gripping operation or a virtual object contacting operation, neither a gripping operation nor a contacting operation can be performed with respect to the desk.

Therefore, separately from the setting of the operation mode based on the postures of the fingers as illustrated in Figs. 27 and 33, a behavior when an operation by the user's hand is performed may be individually set for each virtual object to realize an interaction between the user's hand and the virtual object. The behavior in response to the user operation for each virtual object may be set depending on shape, size, category, and the like. For example, settings are made such that, while the user can perform a gripping operation or a contacting operation with respect to a small and light virtual object, a large and heavy virtual object such as a desk is not moved by a user's gripping operation or contacting operation (in other words, a gripping operation or a contacting operation cannot be performed). Furthermore, a different behavior in response to a user operation may be set for each operation mode with respect to the same virtual object.

### E-7. Co-existence of Multiple Operation Modes

In a case where switching between the operation modes is performed on the basis of the postures of the fingers as illustrated in Figs. 27 and 33, data such as the distance between the fingertips may be near a threshold, making it difficult to determine a mode. In such a case, two or more operation modes between which determination is difficult may co-exist simultaneously.

For example, a case where a virtual button is arranged beside the user's hand in a situation where the grip operation mode and the button operation mode coexist will be described. In such a case, the application execution unit 1201 sets a virtual gripping point at a position having a certain offset with respect to the back of the hand, and sets a virtual pressing point at a position on the fingertip of the forefinger. The application execution unit 1201 does not cause a change in the virtual space even when the virtual gripping point collides with the virtual button. In addition, the application execution unit 1201 activates the operation of the virtual button when a virtual button pressing operation, in which the virtual pressing point contacts the virtual button, is performed.

### F. Calibration of Position of Virtual Gripping Point

In the AR system 100 using the controller 110 that includes the finger posture recognition unit 112 as illustrated in Figs. 10 and 11, the application execution unit 1201 can determine an operation mode taken by the user on the basis of the postures of the fingers, and perform the user operation on the virtual object for each operation mode.

On the other hand, in the AR system 100 using the controller 110 that does not include the finger posture recognition unit 112 as well, the application execution unit 1201 can perform a virtual object gripping operation using a virtual gripping point as illustrated in Figs. 20 to 26. However, it is a requirement that the controller 110 includes the finger gesture recognition unit 113 for recognizing a contact of a fingertip or the like as illustrated in Fig. 9.

### F-1. Calibration Method (1)

The above description is based on the premise that a state in which the fingertips of the thumb and the forefinger of the user are in contact with each other and the movement of the fingertips is restrained by the contact as illustrated in Fig. 18 is recognized as a state in which the virtual object is being gripped. On the other hand, in the AR system 100 using the controller 110 that includes the finger posture recognition unit 112 as illustrated in Figs. 10 and 11, by recording information on the postures of the fingers such as the positions of the fingertips at the time of performing a gripping operation, the gripping of the virtual object can be realized even in a state where the fingertips are not in contact with each other. For example, when the virtual gripping point enters the grip detection region, which is a posture of a finger recorded as a gripping operation, the application execution unit 1201 can start the flow of gripping the virtual object.

For example, when the user wears the controller 110 on the back of the hand, as a calibration for setting a position of a virtual gripping point, the user may be instructed to set the virtual gripping point at a position of a fingertip at the time of performing a gripping operation, and the virtual gripping point may be recorded.

### F-2. Calibration Method (2)

In the AR system 100 using the controller 110 that does not include the finger posture recognition unit 112 as illustrated in Fig. 9, a virtual gripping point is calibrated by a method different from the above-described method. For example, body information such as a hand size, a gender, and a height of the user may be acquired, a size of the user's hand may be estimated on the basis of the body information, and a virtual gripping point may be set to a position having a certain offset based on the estimated size of the hand. Note that the user's body information may be input to the AR system 100 using user's utterance or through an input device, but the user's body information may be estimated on the basis of spatial position information obtained through the head sensor unit 120 or the like when the user wears the AR glasses.

In a case where persons having the same height are different in hand size or finger length due to individual differences, there is concern that a virtual gripping point set on the basis of the hand size estimated from the user's body information may not be accurate. Furthermore, the virtual gripping point, which is a position where the fingertips used for gripping a virtual object are assumed to come into contact with each other, should be set to a position having a certain offset with respect to the user's hand in principle, but is set to a position having a certain offset with respect to the main body of the controller 110 for convenience. Therefore, the virtual gripping point also changes depending on a position of the controller 110 when worn on the back of the hand. For example, whenever the controller 110 is worn, the offset of the virtual gripping point with respect to the user's hand changes.

Therefore, in the AR system 100 using the controller 110 that does not include the finger posture recognition unit 112 as illustrated in Fig. 9, it is effective to detect information on a position of a hand that can be accurately detected using the hand position detection unit 111 to calibrate the virtual gripping point.

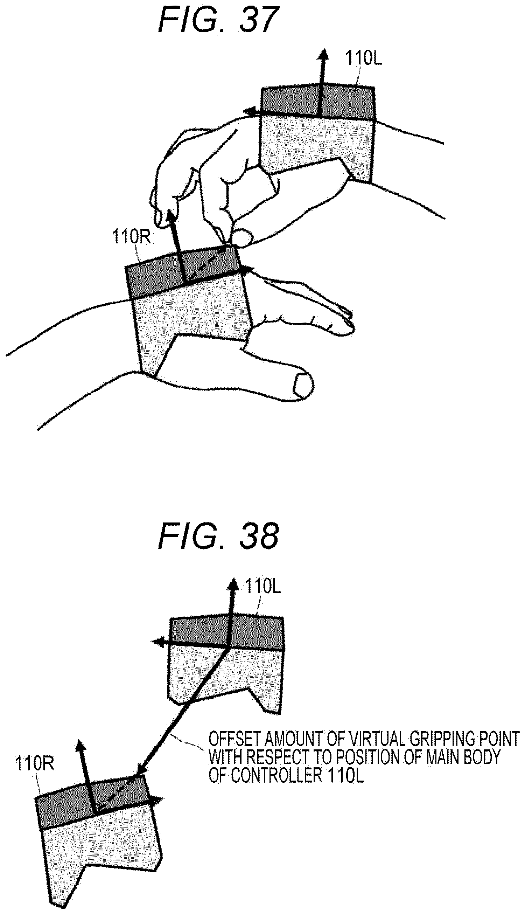

Fig. 37 illustrates a method of calibrating the virtual gripping point on the basis of information on the position of the hand detected by the hand position detection unit 111 of the controller 110. In an example illustrated in Fig. 37, a calibration is performed using two controllers 110R and 110L worn on the backs of the user's right and left hands, respectively.

After the user wears the controllers 110R and 110L on the backs of the right and left hands, respectively, the user is instructed to take a finger posture as illustrated in Fig. 37. The finger posture mentioned here is a posture in which the fingertips of the thumb and another finger (the forefinger or the like) of the right hand are brought into contact with each other at a specific position of the main body of the controller 110L worn on the back of the left hand. The application execution unit 1201 may display an instruction to be guided by the AR glasses so that the user is guided to take the finger posture as illustrated in Fig. 37.

Then, when a predetermined time elapses after the user is instructed to take the finger posture, positions of the right and left hands detected by the controllers 110R and 110L, respectively, are recorded. In the example illustrated in Fig. 37, since it is instructed as a finger posture to bring the fingertips of the right hand into contact with each other at a specific position of the main body of the controller 110L worn on the back of the left hand, a position of a virtual gripping point of the right hand having a certain offset with respect to the main body of the controller 110R worn on the back of the right hand can be directly obtained from information on relative positions between the two controllers 110R and 110L. Specifically, as illustrated in Fig. 38, a virtual gripping point of the right hand can be obtained on the basis of an offset amount at a specific position of the controller 110L with respect to the position of the main body of the controller 110R.

Note that Fig. 37 illustrates an example in which the virtual gripping point of the right hand is calibrated. In a case where a virtual gripping point of the left hand is calibrated, the left and right sides may be inverted. Then, the user may be instructed to take a finger posture with the left hand, and a virtual gripping point of the left hand may be calculated by a similar method to that described above. Alternatively, assuming that there is no difference between the right and left sides, the position of the virtual gripping point of the left hand may be set by horizontally inverting the position of the virtual gripping point calculated with the right hand, such that the calibration is performed only once.

Furthermore, separately from the above-described method, for example, in the controller 10 worn on the back of the user's hand using the belt 11 wound around the user's hand as illustrated in Figs. 1 to 3, it may also be considered to calculate an offset distance of a virtual gripping point with respect to the main body of the controller 10 by detecting a length by which the belt 11 is wound using a sensor to obtain information on a circumferential length of the hand and estimating a finger length corresponding to the circumferential length of the hand.

### G. Running Calibration on Position of Virtual Gripping Point

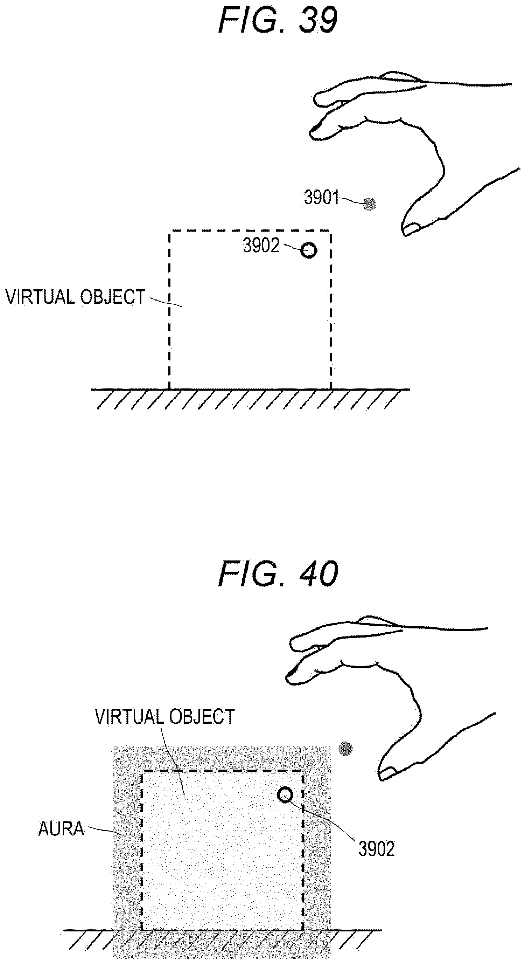

The virtual gripping point is a position where the fingertips used for gripping a virtual object are assumed to come into contact with each other when a gripping operation is performed at a current position of the hand (or in the grip operation mode). Fig. 39 illustrates a state in which a virtual gripping point 3902 is erroneously set at a position further away from a fingertip than a position of a virtual gripping point 3901 which should be set in principle.

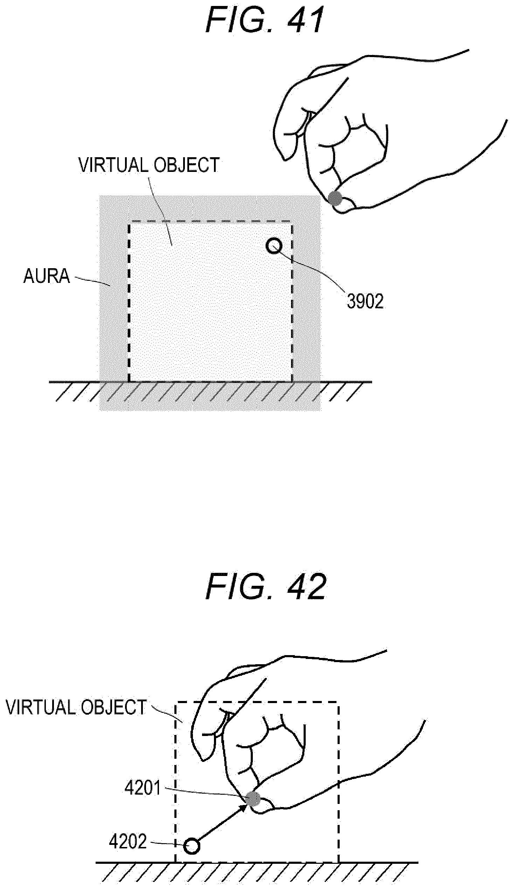

In such a case, as illustrated in Fig. 40, an aura occurs around the virtual object at a timing when the virtual gripping point 3902 erroneously set to a faraway position enters a grip detection region. Then, the user attempts to grip the virtual object with the virtual gripping point 3902 erroneously set to a faraway position as a target, and accordingly, the virtual object is gripped at a position deviated from the center of the virtual object as illustrated in Fig. 41. As a result, the virtual object gripping operation observed by the user through the AR glasses is displayed as an unnatural video with no reality.

The application execution unit 1201 may detect a correction value of the offset amount of the virtual gripping point with respect to the main body of the controller 110 on the basis of the relative positional relationship between the position where the virtual object is arranged and the position where the fingertips are in contact with each other, which is acquired through the controller 110, to perform a running calibration.

When the controller 110 that does not include a finger posture recognition unit is used, since the virtual gripping point is set to a wrong position, gripping occurs continuously beyond the boundary of the virtual object and at a place far away from the center of the virtual object. Assuming that the virtual gripping point is set to a wrong position based on the tendency to perform such an erroneous gripping operation, the application execution unit 1201 performs a running calibration on the position of the virtual gripping point by performing processing of gradually bringing the position of the virtual gripping point closer to the center position of the virtual object where the gripping should be performed in principle.

The virtual gripping point is a position where the fingertips used for gripping the virtual object are assumed to come into contact with each other when a gripping operation is performed at a current position of the hand (as described above). It is ideal that the virtual object can be gripped in a state where the virtual gripping point is located near the center of the virtual object. When the virtual gripping point 3902 is set to a position deviated from the ideal position 3901 as illustrated in Fig. 39, it is frequent that the virtual object is gripped at a position 4202 deviated from the center 4201 of the virtual object as illustrated in Fig. 42. Therefore, assuming that the virtual gripping point is set to a wrong position based on the tendency to perform an erroneous gripping operation, the application execution unit 1201 performs a running calibration on the position of the virtual gripping point by performing processing of gradually bringing the position of the virtual gripping point closer to the center position of the virtual object where the gripping should be performed in principle. When the running calibration is performed, the user can perform a normal and realistic virtual object gripping operation as illustrated in Figs. 21 to 26.

### H. Control of Size of Virtual Gripping Point (Region)

The virtual gripping point is set to a position where the fingertips used for gripping a virtual object are assumed to come into contact with each other when a gripping operation is performed at a current position of the hand (or in the grip operation mode). In the flow of gripping the virtual object (for example, see Figs. 21 to 26), if a marker indicating the virtual gripping point is displayed by the AR glasses, the user can recognize that the virtual gripping point collides with the virtual object.

A hit area defined in the virtual object to determine that a collision between virtual gripping point and the virtual object has occurred does not need to match the apparent size of the virtual object. For example, the hit area may be set to be about 10% larger than the size of the virtual object.

In addition, the virtual gripping point may be treated as a "virtual gripping region" having a region volume, such as a sphere, rather than a point having no region, and a size of the region may be controlled. For example, in a case where an object to be gripped near a hand is small, the user can easily grip the small target object by increasing a size of the virtual gripping region.

In addition, in a case where a hand and a face are positioned close to each other, it may be difficult to perform a gripping operation accordingly. Therefore, by increasing a size of the virtual gripping region, the user can easily grip a target object positioned close to the face.

### I. Improvement in Visibility of Virtual Gripping Point

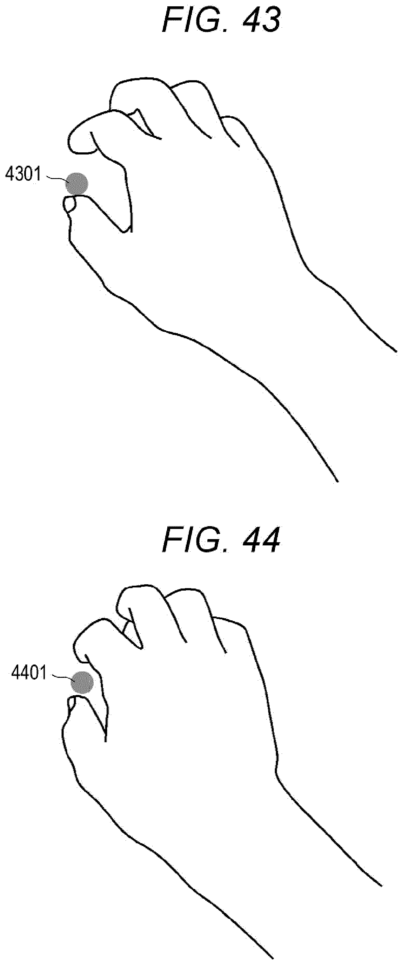

In the grip operation mode, the AR system 100 displays a virtual gripping point 4301 at a position having a certain offset with respect to the back of the hand as illustrated in Fig. 43. Meanwhile, in Fig. 43, the controller 110 is omitted for simplification. However, occlusion caused by the user's own hand may make it difficult to visually recognize a virtual gripping point 4401 as illustrated in Fig. 44.

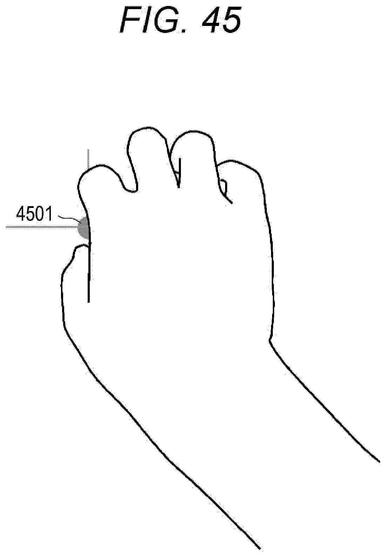

Therefore, the virtual gripping point may be displayed by a display method that makes it easy to visually recognize the virtual gripping point even in a case where the virtual gripping point is hidden by the occlusion caused by the user's own hand. Fig. 45 illustrates an example in which visibility is improved by changing a virtual gripping point 4501 from "point" to "cross". Even though the position of the virtual gripping point 4501 itself is hidden by the occlusion caused by the hand, the user can understand that the virtual gripping point 4501 is located at an intersection position of the cross. When detecting the occlusion caused by the hand at the virtual gripping point on the basis of a position of the hand acquired through the controller or detecting the occlusion caused by the hand at the virtual gripping point on the basis of an image captured by the outward camera 121, the application execution unit 1201 may switch a method of displaying the virtual gripping point.

In addition, when a virtual gripping point is displayed in the same color as a virtual object near the virtual gripping point (e.g., a virtual object to be gripped), it is difficult to visually recognize the virtual gripping point. Therefore, the virtual gripping point may be displayed using a complementary color of another virtual object to improve visibility.

Furthermore, in a case where a collider is displayed in the contact operation mode or in a case where a virtual pressing point is displayed in the button operation mode, if the collider or the virtual pressing point is displayed using a complementary color of a target virtual object or a virtual button in the similar manner, visibility is improved.

### J. Effects

The AR system 100 according to the present disclosure is configured to detect a position of a controller installed on a back of a user's hand, set a virtual gripping point to a position having a certain offset from the position of the controller, and perform a gripping interaction on the basis of a positional relationship of a virtual object with the virtual gripping point and a contact state between fingertips for gripping the virtual object. Even in a case where a position of a finger cannot be accurately detected due to occlusion, a detection accuracy problem, or the like, the user can realize an intuitive and comfortable gripping interaction with respect to the virtual object on the basis of information on the position and posture of the controller.

Furthermore, the AR system 100 according to the present disclosure is configured to perform switching between operation modes each performed on a virtual object by a user's finger on the basis of information on a posture of the finger acquired through the controller. The operation modes include a grip operation mode in which fingertips are in contact with each other to grip a virtual object, and a contact operation mode in which a palm or a fingertip is in contact with a virtual object. Therefore, the user can easily and intuitively perform a plurality of operations, such as a gripping operation and a contacting operation, with respect to the same virtual object without any assistance of UIs or the like.

Furthermore, the AR system 100 according to the present disclosure is configured to perform switching between three modes including switching to a button operation mode in which a virtual button is pressed with a fingertip, in addition to the grip operation mode and the contact operation mode, on the basis of the information on the posture of the finger acquired through the controller. Therefore, the user can intuitively perform switching between the three operation modes without a load, thereby smoothly realizing an intended operation with respect to the virtual object. In addition, it is possible to prevent a virtual button pressing operation unintended by the user from being activated.

Furthermore, the AR system 100 according to the present disclosure is configured to calibrate a position of a virtual gripping point on the basis of the information on the position of the hand acquired through the controller. There is an individual difference in user's hand size, and it is assumed that the position of the controller with respect to the back of the hand changes whenever the controller is installed on the back of the hand. Therefore, the offset of the virtual gripping point with respect to the position of the controller varies depending on the individual difference or the position where the controller is installed. In the AR system 100 according to the present disclosure, it is possible to correct the virtual gripping point to an accurate virtual gripping point by performing a calibration, and thus, it is possible for each user to perform an appropriate virtual object gripping operation when the controller is installed on the back of the hand.

Furthermore, the AR system 100 according to the present disclosure is configured to calculate a correction value of an offset amount of the virtual gripping point with respect to the back of the hand on the basis of an amount of deviation between the contact position between the fingertip and the virtual gripping point, when the user performs a virtual object gripping operation in the grip operation mode, to perform a dynamic calibration on the position of the virtual gripping point. Therefore, while the user performs a virtual object gripping operation, a mismatch between the contact position between the fingertips and the position of the virtual gripping point is naturally resolved.

Furthermore, the AR system 100 according to the present disclosure can support a user's virtual object gripping operation by displaying a virtual gripping point using AR glasses. In addition, the AR system 100 according to the present disclosure can support a user's operation with respect to the virtual object for each operation mode by displaying a contact determination collider on a palm or a fingertip in the contact operation mode, and displaying a virtual pressing point on the fingertip pressing a virtual button in the button operation mode.

Furthermore, the AR system 100 according to the present disclosure is configured to change a method of displaying the virtual gripping point in a situation where the visibility of the virtual gripping point is impaired due to occlusion between the virtual gripping point and the user's hand in the grip operation mode. Therefore, even if occlusion is caused on the virtual gripping point by the hand, the visibility of the virtual gripping point is ensured by changing the display method, so that the user can easily perform a virtual object gripping operation while grasping the position of the virtual gripping point.

### INDUSTRIAL APPLICABILITY

The present disclosure has been described in detail above with reference to the specific embodiments. However, it is obvious to those skilled in the art that modifications and substitutions may be made to the above-described embodiments without departing from the gist of the present disclosure.

In the present specification, the description has been mainly focused on the embodiments in which an interaction between a fingertip and a virtual object according to the present disclosure is applied to the AR system, but the gist of the present disclosure is not limited thereto. For example, the present disclosure can be similarly applied to a VR system in which a virtual space is perceived as a real space, an MR system in which a real space and a virtual space are mixed, and the like to realize an interaction between a fingertip and a virtual object.

In short, the present disclosure has been described in the form of exemplification, and the contents described in the present specification should not be interpreted in a restrictive manner. In order to determine the gist of the present disclosure, the claims should be taken into consideration.

Note that the technology disclosed in the present specification can have the following configurations.
(1) An information processing apparatus including:
   an acquisition unit that acquires a position of a hand and a finger gesture of a user; and
   a control unit that controls a displaying operation of a display device that superimposes and displays a virtual object on a real space,
   in which the control unit sets a virtual gripping point to a position having a certain offset with respect to the hand, and controls the display device to display a virtual object gripping operation on the basis of a positional relationship between the virtual gripping point and the virtual object and a contact state between fingertips.
(2) The information processing apparatus according to (1),
   in which the acquisition unit acquires the position of the hand and the finger gesture on the basis of sensor information from a sensor attached to a back of the hand.
(3) The information processing apparatus according to (1) or (2),
   in which the acquisition unit further acquires a posture of a finger of the user, and
   the control unit controls switching between operation modes each performed by the finger of the user with respect to the virtual object on the basis of information on the posture of the finger.
(4) The information processing apparatus according to (3),
   in which the control unit controls mode switching to a grip operation mode, in which the fingertips are in contact with each other to grip the virtual object, and a contact operation mode, in which a palm or a fingertip is in contact with the virtual object.
(5) The information processing apparatus according to (4),
   in which the control unit further controls mode switching to a button operation mode in which a virtual button is pressed with a fingertip.
(6) The information processing apparatus according to any one of (3) to (5),
   in which the control unit determines an operation mode by using information on an opened degree between the fingers and a distance between the fingertips.
(7) The information processing apparatus according to any one of (1) to (6),
   in which the control unit calibrates the position of the virtual gripping point on the basis of the position of the hand acquired by the acquisition unit.
(8) The information processing apparatus according to any one of (1) to (7),
   in which the control unit calibrates the position of the virtual gripping point by calculating a correction value of an offset amount of the virtual gripping point with respect to the hand on the basis of an amount of deviation between a contact position between the fingertips and the virtual gripping point when the user performs a virtual object gripping operation.
(9) The information processing apparatus according to any one of (1) to (8),
   in which the control unit controls the display device to display the virtual gripping point.
(10) The information processing apparatus according to (9),
   in which the control unit controls the display device to change a method of displaying the virtual gripping point in a situation where the visibility of the virtual gripping point is impaired due to occlusion between the virtual gripping point and the hand of the user.
(11) An information processing method including:
   an acquisition step of acquiring a position of a hand and a finger gesture of a user; and
   a control step of controlling a displaying operation of a display device that superimposes and displays a virtual object on a real space,
   in which in the control step, a virtual gripping point is set to a position having a certain offset with respect to the hand, and the display device is controlled to display a virtual object gripping operation on the basis of a positional relationship between the virtual gripping point and the virtual object and a contact state between fingertips.
(12) A computer-readable computer program for causing a computer to function as:
   an acquisition unit that acquires a position of a hand and a finger gesture of a user; and
   a control unit that controls a displaying operation of a display device that superimposes and displays a virtual object on a real space,
   in which the control unit sets a virtual gripping point to a position having a certain offset with respect to the hand, and controls the display device to display a virtual object gripping operation on the basis of a positional relationship between the virtual gripping point and the virtual object and a contact state between fingertips.
(13) An augmented reality system including:
   a display device that superimposes and displays a virtual object on a real space;
   an acquisition unit that acquires a position of a hand and a finger gesture of a user; and
   a control unit that controls a displaying operation of the display device,
   in which the control unit sets a virtual gripping point to a position having a certain offset with respect to the hand, and controls the display device to display a virtual object gripping operation on the basis of a positional relationship between the virtual gripping point and the virtual object and a contact state between fingertips.

### REFERENCE SIGNS LIST

- 10: Controller
- 11: Belt
- 100: AR system
- 110: Controller
- 111: Hand position detection unit
- 112: Finger posture recognition unit
- 113: Finger gesture recognition unit
- 114: Tactile feedback unit
- 120: Head sensor unit
- 121: Outward camera
- 122: Inward camera
- 123: Microphone
- 124: Gyro sensor
- 125: Acceleration sensor
- 126: Azimuth sensor
- 131: Cover portion
- 132: Speaker
- 133: Communication unit
- 140: Control unit
- 150: Storage unit
- 300: AR system
- 301: AR glasses
- 302: Controller
- 400: AR system
- 401: AR glasses
- 402: Controller
- 403: Information terminal
- 500: Controller
- 501, 502, 503: IMU
- 511, 512, 513: Band

## Claims

1. An information processing apparatus comprising:
an acquisition unit that acquires a position of a hand and a finger gesture of a user; and
a control unit that controls a displaying operation of a display device that superimposes and displays a virtual object on a real space,
wherein the control unit sets a virtual gripping point to a position having a certain offset with respect to the hand, and controls the display device to display a virtual object gripping operation on a basis of a positional relationship between the virtual gripping point and the virtual object and a contact state between fingertips.

2. The information processing apparatus according to claim 1,
wherein the acquisition unit acquires the position of the hand and the finger gesture on a basis of sensor information from a sensor attached to a back of the hand.

3. The information processing apparatus according to claim 1,
wherein the acquisition unit further acquires a posture of a finger of the user, and
the control unit controls switching between operation modes each performed by the finger of the user with respect to the virtual object on a basis of information on the posture of the finger.

4. The information processing apparatus according to claim 3,
wherein the control unit controls mode switching to a grip operation mode, in which the fingertips are in contact with each other to grip the virtual object, and a contact operation mode, in which a palm or a fingertip is in contact with the virtual object.

5. The information processing apparatus according to claim 4,
wherein the control unit further controls mode switching to a button operation mode in which a virtual button is pressed with a fingertip.

6. The information processing apparatus according to claim 3,
wherein the control unit determines an operation mode by using information on an opened degree between the fingers and a distance between the fingertips.

7. The information processing apparatus according to claim 1,
wherein the control unit calibrates the position of the virtual gripping point on a basis of the position of the hand acquired by the acquisition unit.

8. The information processing apparatus according to claim 1,
wherein the control unit calibrates the position of the virtual gripping point by calculating a correction value of an offset amount of the virtual gripping point with respect to the hand on a basis of an amount of deviation between a contact position between the fingertips and the virtual gripping point when the user performs a virtual object gripping operation.

9. The information processing apparatus according to claim 1,
wherein the control unit controls the display device to display the virtual gripping point.

10. The information processing apparatus according to claim 9,
wherein the control unit controls the display device to change a method of displaying the virtual gripping point in a situation where the visibility of the virtual gripping point is impaired due to occlusion between the virtual gripping point and the hand of the user.

11. An information processing method comprising:
an acquisition step of acquiring a position of a hand and a finger gesture of a user; and
a control step of controlling a displaying operation of a display device that superimposes and displays a virtual object on a real space,
wherein in the control step, a virtual gripping point is set to a position having a certain offset with respect to the hand, and the display device is controlled to display a virtual object gripping operation on a basis of a positional relationship between the virtual gripping point and the virtual object and a contact state between fingertips.

12. A computer-readable computer program for causing a computer to function as:
an acquisition unit that acquires a position of a hand and a finger gesture of a user; and
a control unit that controls a displaying operation of a display device that superimposes and displays a virtual object on a real space,
wherein the control unit sets a virtual gripping point to a position having a certain offset with respect to the hand, and controls the display device to display a virtual object gripping operation on a basis of a positional relationship between the virtual gripping point and the virtual object and a contact state between fingertips.

13. An augmented reality system comprising:
a display device that superimposes and displays a virtual object on a real space;
an acquisition unit that acquires a position of a hand and a finger gesture of a user; and
a control unit that controls a displaying operation of the display device,
wherein the control unit sets a virtual gripping point to a position having a certain offset with respect to the hand, and controls the display device to display a virtual object gripping operation on a basis of a positional relationship between the virtual gripping point and the virtual object and a contact state between fingertips.
